# EUROPÄISCHE PATENTSCHRIFT

(11) **EP 1 856 902 B1**
(45) Veröffentlichungstag und Bekanntmachung des Hinweises auf die Patenterteilung: **29.08.2018**
(21) Anmeldenummer: 06723359.3
(22) Anmeldetag: 10.03.2006
(51) Int. Cl.: H04M 7/00, H04M 3/493

(54) **VERFAHREN UND ANORDNUNG ZUR LOSEN KOPPLUNG EIGENSTÄNDIG ARBEITENDER WEB- UND SPRACHPORTALE FÜR MULTIMODALE DIENSTE**
METHOD AND APPARATUS FOR LOOSE COUPLING OF AUTONOMOUS WEB AND SPEECH PORTALS FOR MULTIMODAL SERVICES
PROCEDE ET DISPOSITIF PERMETTANT UN COUPLAGE AMOVIBLE D'UN PORTAIL WEB ET D'UN PORTAIL VOCAL DE FONCTIONNEMENT AUTONOME DESTINES A DES SERVICES MULTIMODAUX

(30) Priorität: 10.03.2005 DE 102005011536
(43) Veröffentlichungstag der Anmeldung: 21.11.2007
(73) Patentinhaber: SIKOM Software GmbH, 69126 Heidelberg (DE)
(72) Erfinder: HEINTZ, Frank, 08112 Wilkau-Hasslau (DE)
(74) Vertreter: Dreykorn-Lindner, Werner
(86) Internationale Anmeldenummer: PCT/EP2006/002246
(87) Internationale Veröffentlichungsnummer: WO 2006/094830

(56) Entgegenhaltungen:
- WO-A-99/55049
- US-A- 5 912 952
- US-A1- 2003 005 076
- US-A1- 2004 117 804

## Beschreibung

Die Erfindung betrifft in erster Linie ein Verfahren und eine Anordnung zur losen Kopplung eigenständig arbeitender WEB- und Sprachportale gemäß den Patentansprüchen 1 oder 7.

Seit längerem ist es bekannt, IP-Netze (z. B, Internet oder Intranet) zur Telefonie zu verwenden. Bei der Internet-Telefonie, die auch als Voice-over-Internet-Protocol (VoIP) bezeichnet wird, müssen sowohl der Anrufer als auch der Gesprächspartner über Endgeräte, mit einem Internet-Zugang verfügen. Um ein Gespräch über ein IP-Netz führen zu können, müssen beide Endgeräte in Verbindung mit dem Internet stehen. Die Verbindung der Endgeräte zum Internet kann über das Telefonnetz zum Ortstarif hergestellt werden. Die eigentliche und bei einer herkömmlichen Gesprächsverbindung über das Telefonnetz teure Gesprächsverbindung zwischen dem Anrufer und dem Gesprächspartner wird über das in der Regel sehr kostengünstige IP-Netz bewältigt.

Es gibt verschiedene Verfahren zur Durchführung von VoIP, welche durch die Art der verwendeten Endgeräte bestimmt werden. Häufig werden hier multimediafähige Personal Computer (PC) eingesetzt, auf denen eine geeignete Software zum Verschicken von Sprachdaten über das IP-Netz installiert ist. Dadurch ist die Telefonie von PC zu PC via IP-Netz möglich.

Bei der Telefonie von PC zu PC ist der Nutzerkreis jedoch stark eingeschränkt, da eine große Zahl potentieller Nutzer der Internet-Telefonie über keinen PC bzw. keinen entsprechend ausgerüsteten PC verfügen. Deshalb werden von einigen Anbietern von Internet-Telefonie Lösungen angeboten, bei denen mit sog. Gateways ein Übergang von dem herkömmlichen Telefonnetz in ein IP-Netz realisiert wird. Dadurch ist VoIP zwischen einem herkömmlichen Telefon (analog oder ISDN) und einem PC oder sogar zwischen zwei Telefonen möglich. Allerdings bedarf es zur Eingabe der Ziel-Adresse eines Teilnehmers, der nur eine IP-Adresse aufweist, eines besonders ausgestatteten Telefons. Das Telefon muss zumindest über eine Eingabemöglichkeit für alphanumerische Zeichen verfügen.

Um einem Telefonkunden Webseiten in akustischer Form zur Verfügung zu stellen, ohne dass der Kunde einen Personalcomputer zur Darstellung der Webseite benötigt, ist aus der DE 199 59 850 A1 ein Kommunikationssystem bekannt, welches ein erstes Kommunikationsnetz, an das mehrere Telefone anschaltbar sind, und ein zweites Kommunikationsnetz, insbesondere das Internet, aufweist, an das wenigstens ein abrufbare grafische und/oder textuelle Darstellungen enthaltender Server anschaltbar ist. Sind die Server, beispielsweise an dem Internet angeschaltet, kann es sich bei den abrufbaren grafischen und/oder textuellen Darstellungen um Webseiten handeln, die zum Beispiel in der HTML (Hypertext-Markup-Language)-Sprache geschrieben sind. Um einem Kunden über ein Telefon einen Zugang zu einem Informations-Server zu ermöglichen, sind das erste und zweite Kommunikationsnetz über eine Verbindungseinrichtung verbunden. Die Verbindungseinrichtung weist eine Einrichtung zum Erkennen von an einem Telefon eingegebenen Befehlen und/oder Steuerinformationen sowie eine Speichereinrichtung zum Speichern einer grafischen und/ oder textuellen Darstellung auf, die unter Ansprechen auf einen eingegebenen Befehle und/oder einer Steuerinformationen von dem Informations-Server abgerufen wurde. Um die grafische und/oder textuelle Darstellung dem Benutzer über das Telefon akustisch wiedergeben zu können, ist eine Umsetzungseinrichtung zum Umsetzen wenigstens eines Teils der in der Speichereinrichtung abgelegten grafischen und/oder textuellen Darstellung in die entsprechende akustische Darstellung zur Übertragung zum Telefon vorgesehen. Die Umsetzungseinrichtung weist eine Extraktionseinrichtung, beispielsweise einen sogenannten Parser, zum Extrahieren der in die akustische Darstellung umsetzbaren Informationsinhalte, von Kennzeichnungen und/oder Steuerparametern aus der gespeicherten grafischen und/oder textuellen Darstellung auf. Ein sogenannter Interpreter dient zum Identifizieren und Übersetzen der extrahierten Information, Kennzeichnungen und/oder Steuerparameter derart, dass sowohl die übersetzten Informationen als auch die übersetzten Steuerparameter in einem Synthesizer in die entsprechende akustische Darstellung umsetzbar sind. Um eine interaktive Kommunikation zwischen dem Benutzer des Telefons und dem Informations-Server bereitstellen zu können, ist eine Einrichtung zur Steuerung des Dialogs zwischen dem Benutzer des Telefons und dem Informations-Server vorgesehen. Die Einrichtung zur Dialogsteuerung kann einerseits durch die aus der gespeicherten grafischen und/oder textuellen Darstellung gewonnen Steuerparameter und andererseits durch die vom Benutzer eingegebenen Befehle und Steuereinformationen angesteuert werden. Beispielsweise kann die Einrichtung zur Dialogsteuerung vorbestimmte Texte unter Ansprechen auf vorbestimmte Steuerparameter oder Steuereinformationen für den Benutzer bereitstellen. Befehle und Steuerinformationen können vom Benutzer in sprachlicher Form oder mittels eines Melirfrequenzwahlverfahrens (MFV) tastaturgesteuert am Telefon eingegeben werden. Hierzu umfasst die Einrichtung zum Erkennen von am Telefon eingegebenen Befehlen und/oder Steuerinformationen eine Spracherkennungseinrichtung und/oder einen MFV-Detektor. Mit Hilfe der Spracherkennungseinrichtung und dem akustischen Synthesizer kann eine interaktive Kommunikationsverbindung zwischen dem Benutzer des Telefons und dem Informations-Server auf rein sprachlicher Ebene durchgeführt werden. Die Spracherkennungseinrichtung kann dabei beispielsweise das sogenannte Keyword- und/oder Key-phrase-Spotting anwenden, um aus einer Äußerung den relevanten Teil, beispielsweise nur die sprachliche Steuerinformation, extrahieren zu können. Um unter Berücksichtigung der begrenzten akustischen Aufnahmefähigkeit des Benutzers ein möglichst benutzerfreundliches Interagieren mit dem Informations-Server zu ermöglichen, erfolgt das akustische Ausgeben oder "Vorlesen" der grafischen und/oder textuellen Darstellung abschnittsweise. Die Unterteilung der vom Informations-Server abgerufenen grafischen und/oder textuellen Darstellung in mehrere Abschnitte vorbestimmter Länge führt die Extraktionseinrichtung in Verbindung mit dem Interpreter und der Dialogsteuereinrichtung aus, indem entsprechende Kennzeichnungen aus der grafischen und/oder textuellen Darstellung gewonnen und verarbeitet werden. Zu jedem Abschnitt kann die Einrichtung zur Dialogsteuerung einen Abschlusstext erzeugen, der beispielsweise alle in dem jeweiligen Abschnitt enthaltenen Sprung- oder Verzweigungsadressen enthält. Um vom Telefon aus einen Informations-Server gezielt anwählen zu können, ist in der Verbindungseinrichtung ein Speicher vorgesehen, in dem die aktuellen Rufnummern und die dazugehörenden IP-Adressen der jeweiligen Informations-Server abgelegt sind. Neben reinen, nur vorzulesenden Textpassagen können in einer grafischen und/oder textuellen Darstellung auch vom Benutzer auszufüllende Formulare enthalten sein, wobei die auszufüllenden Felder des Formulars durch entsprechende Steuerparameter gekennzeichnet sind. Diese aus der grafischen und/oder textuellen Darstellung gewonnenen Steuerparameter enthalten beispielsweise Hinweise darüber, an welchen Stellen des Formulars Einträge eingefügt werden können. Zweckmäßigerweise erfolgt die sprachliche Aufforderung zum Ausfüllen des Formulars schrittweise, d.h. jedes Eingabefeld wird zeitlich hintereinander abgefragt und vom Benutzer durch entsprechende Eingaben ausgefüllt. Diese Eingaben werden über die Verbindungseinrichtung zum Informations-Server übertragen und dort automatisch an die richtigen Stellen innerhalb des Formulars plaziert. Ferner können in der grafischen und/oder textuellen Darstellung vom Ersteller Steuerparameter eingefügt werden, die beispielsweise die Adresse einer Audiodatei (Hörspiels, Musikstücke u.s.w.) enthalten, deren Inhalt zwar nicht in der grafischen und/oder textuellen Darstellung ausgegeben wird, aber bei Anforderung durch den Benutzer aufgerufen und akustisch über das Telefon ausgegeben wird. Ein weiteres Leistungsmerkmal der Verbindungseinrichtung kann darin bestehen, dass die Dialogsteuereinrichtung automatisch dem Benutzer des Telefons einen Fehler meldet, wenn die Spracherkennungseinrichtung ein Wort oder eine Phrase nicht richtig erkannt hat. Die Dialogsteuereinrichtung kann zu diesem Zweck derart ausgebildet sein, dass sie im Fehlerfall dem Benutzer wiederholt zur Eingabe eines Befehls oder einer Verzweigungsmöglichkeit auffordert.

Um den Aufbau einer Kommunikationsverbindung auch von herkömmlichen Telefonen (ersten Endgerät) aus über ein IP-Netz zu einem IP-Teilnehmer (zweites Endgerät) zu ermöglichen, ist aus der DE 100 09 279 A1 ein weiteres Verfahren bekannt, bei dem von dem ersten Endgerät eine Rufnummer, die die Übergabe des Verbindungsaufbaus auf einen Diensterechner bewirkt, gewählt wird, bei dem durch den Diensterechner der Aufbau einer Sprachverbindung von dem ersten Endgerät zu einer Spracherkennungseinrichtung veranlasst wird, bei dem eine Ziel-Adresse des zweiten Endgeräts über das erste Endgerät in einem Sprachformat eingegeben wird, bei dem die Ziel-Adresse mittels Spracherkennung von dem Sprachformat in ein IP-kompatibles Format umgewandelt wird und bei dem von dem Diensterechner der Aufbau der Kommunikationsverbindung von dem ersten Endgerät zu dem zweiten Endgerät über ein Gateway unter Zuhilfenahme der Ziel-Adresse in dem IP-kompatiblen Format veranlasst wird. Zum Verbindungs-aufbau wird von dem Telefon eine Rufnummer gewählt, die die Übergabe des Verbindungsaufbaus auf einen Diensterechner bewirkt. Das Telefonnetz ist als ein digitales Telefonnetz (z.B. Integrated Services Digital Network, ISDN) oder als ein analoges Telefonnetz (z. B. Public Switched Telephone Network, PSTN) ausgebildet. Ein Übergang von dem herkömmlichen Telefonnetz in das IP-Netz ist mittels eines Gateways realisiert. Anhand der gewählten Rufnummer und anhand anderer Verbindungsparameter (Herkunft des Anrufes, Datum, Uhrzeit, etc.) erkennt der Diensterechner, dass eine Ziel-Adresse eines Internet-Protocol (IP)-Teilnehmers im Sprachformat eingegeben werden soll und veranlasst den Aufbau einer Sprachverbindung von dem ersten Endgerät zu einer Spracherkennungs-einrichtung. Die Spracherkennungseinrichtung ist entweder als eigenständige Einrichtung ausgebildet oder aber in den Diensterechner integriert oder die Spracherkennungseinrichtung ist integraler Bestandteil der Vermittlungsstelle. Zur Eingabe der Ziel-Adresse wird - wahlweise auf eine Aufforderung der Spracherkennungseinrichtung hin - die Ziel-Adresse des IP-Teilnehmers ganz einfach von dem Anrufer in das Telefon gesprochen. Die Ziel-Adresse ist beispielsweise eine Electronic-Mail (eMail)-Adresse, eine Internet-Protocol (IP)-Adresse oder die Adresse einer Homepage des Teilnehmers im IP-Netz. Die Spracherkennungseinrichtung wandelt dann die Ziel-Adresse von dem Sprachformat in ein IP-kompatibles Format um. Schließlich veranlasst der Diensterechner unter Zuhilfenahme der Ziel-Adresse in dem IP-kompatiblen Format den Aufbau der Kommunikationsverbindung von dem ersten Endgerät zu dem zweiten Endgerät des IP-Teilnehmers über das Telekommunikationsnetz, das Gateway und das IP-Netz. Der Diensterechner und die Spracherkennungseinrichtung sind Teil eines Intelligenten Netzes. Dazu ist der Diensterechner als ein sog. Service Control Point (SCP) ausgebildet. Die Vermittlungsstelle des Telekommunikationsnetzes ist als ein sog. Service Switching Point (SSP) ausgebildet. Die Spracherkennungseinrichtung ist beispielsweise auf einem sogenannten Specialized Resource Point (SRP) des Intelligenten Netzes realisiert. Dadurch wird es denjenigen Telefonnutzern ermöglicht, die lediglich über, ein herkömmliches Telefon mit Wählscheibe oder einfacher Ziffemtastatur verfügen, ohne Zusatzgeräte eine Ziel-Adresse eines IP-Teilnehmers einzugeben und Voice-over-Internet-Protocol (VoIP)-Gespräche zu führen.

Um ein Verfahren und eine Umsetzfunktionsvorrichtung zum drahtlosen Datentransport zu schaffen, in denen ein mobiles Endgerät mit einer Netzschnittstelle, wie einem Internet-Verbindungsanschluss, unter Verwendung eines leitungsvermittelten Datenkanals (CSD-Kanal) direkt verbunden wird, wenn eine IP-Adresse vorliegt, und unter Verwendung eines Modems mit dem PSTN verbunden wird, wenn eine Telefonnummer als Identifikation vorliegt, ist aus der DE 199 33 751 B4 ein Verfahren zum drahtlosen Datentransport unter Verwendung einer mobilen Endeinrichtung, eine Umsetzfunktionsvorrichtung (IWF-Vorrichtung) und ein Server bekannt. Im Einzelnen umfasst das Verfahren die folgenden Schritte:
a) Durchführen eines Wählens in der mobilen Endeinrichtung unter Verwendung eines vorbestimmten Befehls mit einem Identifizierer, der eine IP-(Internet Protocol)-Adresse enthält;
b) Synchronisieren des RLP (Funkverbindungsprotokoll) zwischen der mobilen Endeinrichtung und der Umsetzfunktionsvorrichtung, um einen leitungsvermittelten Datenkanal (CSD-Kanal) gemäß dem Befehl zu errichten;
c) Durchführen von PPP (Point-to-Point Protocol)/TCP (Transmission Control Protocol) in der Umsetzfunktionsvorrichtung gemäß dem Identifizierer; und
d) Öffnen eines Netzschnittstellenkanals durch eine AT (ATention)-Verarbeitungseinheit der Umsetzfunktionsvorrichtung gemäß der IP-Adresse des Identifizierers; wobei der Schritt (c) des Durchführens des PPP/TCP folgende Unterschritte umfasst:
   (c1) Identifizieren in der AT-Verarbeitungseinheit der Umsetzfunktionsvorrichtung, ob der eingegebene Identifizierer eine Telefonnummer oder eine IP-Adresse ist; und
   (c2) Durchführen des PPP/TCP in der Umsetzfunktionsvorrichtung gemäß dem Identifizierer, wenn der leitungsvermittelte Kanal für die Verbindung verwendet wird, und der Identifizierer die IP-Adresse ist; und
   im Schritt (d) ein Modem-Datenkanal in der AT-Verarbeitungseinheit der Umsetzfunktionsvorrichtung zu einem Server, der der Telefonnummer entspricht, über ein öffentliches Telefonnetz geöffnet wird, wenn der Identifizierer eine Telefonnummer ist, und der Netzschnittstellenkanal zu einem Server, der der IP-Adresse entspricht, geöffnet wird, wenn der Identifizierer eine IP-Adresse ist.

Der Schritt (a) kann einen Schritt der Durchführung eines Wählens auf der Basis des WAP (Wireless Application Protocol) umfassen und der Schritt (b) der Synchronisierung des RLP kann auf der Basis eines Systems des Mehrfachzugriffs durch Codetrennung (CDMA) ausgebildet sein. Die Umsetzfunktionsvorrichtung (IWF-Vorrichtung) umfasst eine RLP-(Radio, Link Protocol) Ausführungseinheit zum Ausführen einer Synchronisation mit der mobilen Endeinrichtung für eine Funkverbindung, um einen drahtlosen Datenkanal zu errichten, eine. Datenformatiereinheit zum selektiven Extrahieren eines Identifizierers durch das Identifizieren, ob die Daten, die durch den drahtlbsen Datenkanal, der mit der RLP-Ausführungseinheit verbunden ist, eingegeben werden, ein leitungsvermitteltes Datenformat (CSD-Format) oder ein paketvermitteltes Datenformat (PSD-Format) aufweisen, eine ATention Dial (ATD)-Ausführungseinheit zum Ausführen eines Wählens unter Verwendung eines vorbestimmten Befehls mit dem Identifizierer, wenn der extrahierte Identifizierer eine Telefonnummer ist, eine Modemeinheit, um eine Verbindung mit einem Server, der der Telefonnummer entspricht, über ein öffentliches Telefonnetz zu bilden, wenn der extrahierte Identifizierer eine Telefonnummer ist und eine Netzschnittstelleneinheit, um eine Verbindung mit einem Server zu bilden, der der IP-(Internet-Protokoll)-Adresse entspricht, wenn der extrahierte Identifizierer eine IP-Adresse ist. Dadurch kann die mobile Endeinrichtung direkt mit der Netzschnittstelle, wie einem Internet-Verbindungsanschluss, verbunden werden, sogar wenn der CSD-Kanal statt eines Modems verwendet wird.

Eine weitere Lösung für ein drahtloses Kommunikationssystem und ein Verfahren, welches die sprachgesteuerte Kommunikation zwischen dem mobilen, drahtlosen Kommunikationsendgerät und dem Internet vereinfachen kann, wird in der DE 100 17 503 A1 vorgeschlagen, bei der das drahtlose Kommunikationsendgerät um einen Sprach-Klienten erweitert wird, der mit dem Sprach-Manager im Festnetz-Server kommuniziert (entweder ein WAP-Server oder ein SGSN Server oder ein UMTS-Server), wobei der vorwiegende Anteil der Spracherkennung im Netz (Spracherkennungs-Server) realisiert wird und das drahtlose Kommunikationsendgerät (Spracherkennungs-Client) nur zur Initialisierung, Aktivierung und Einstellung der sprachgesteuerten Eingabe verwendet wird. Dabei kann am drahtlosen Kommunikationsendgerät die spracherweiterte Eingabe für Internet-Seite mittels Soft- oder Hardware-Button aktiviert bzw. deaktiviert werden. Durch Betätigung des Sprach-Buttons kann der Teilnehmer nun zusätzlich mit Hilfe von Sprach-Kommandos innerhalb der aufgerufenen Internet-Seite navigieren, statt nur wie bisher üblich mit Hilfe von "Klicks" und Listen-Aufrufen. Das gesprochene Sprach-Kommando wird dann nicht direkt am drahtlosen Kommunikationsendgerät umgesetzt, sondern zunächst in Form digitalisierter Sprache zum Festnetz-Server übertragen. Dort erfolgen dann die Sprach-Erkennung und das anschließende Sprach-Verstehen. Das erkannte und verstandene Kommando kann dann im üblichen Internet-Standard übertragen werden, und lokal am drahtlosen Kommunikationsendgerät umgesetzt werden. Zur Beschleunigung des Verfahrens kann am Festnetz-Server ein Abbild der lokal aufgerufenen Internet-Seite gehalten werden. Das verstandene Sprach-Kommando kann dann zunächst innerhalb dieser Kopie in eine Navigationsanweisung umgesetzt werden, und die veränderte Internet-Seiten-Information anschließend zum drahtlosen Kommunikationsendgerät übertragen werden. Sicherheitsrelevante Internet-Seiten können mit Hilfe von einem Sprach-Kommando gesichert werden. Durch die Einstellung auf Sprecher-Abhängige Erkennung am Spracherkenner im Festnetz-Server, kann dann nur die Person die Internet-Seite betreten, die dieselbe Seite zuvor mit demselben Sprach-Kommando eingestellt hatte. Typische Fallanwendungen dieser Form der Authentifikation sind Bank-Seiten oder Seiten von Vertriebs-Beauftragten, die per drahtloses Kommunikationsendgerät auf ihre Informationen komfortabel und sicher zugreifen wollen. Genau wie die Eingabe per Sprache erweiterbar ist, kann auch die Ausgabe per Sprache erweitert werden. Für diesen Fall wird in der vorliegenden Erfindung im Festnetz-Server zusätzlich eine Komponente zur Sprach-Synthese installiert und es wird ein Sprach-Ausgabe-Button am drahtlosen Kommunikationsendgerät vorgesehen (Hard- oder Softwaremäßig). Durch entsprechende Aktivierung erfolgt zusätzlich oder alternativ eine Sprach-Ausgabe. Im letzten Beispiel würden die Konto-Bewegungen des entsprechenden Kontos angesagt werden. Dazu wird die Internet-Seite, die auf dem Festnetz-Server gespiegelt ist, gelesen und die entsprechenden Texte (Folge von Wörter) durch einen Sprach-Synthesizer geschickt und anschließend über die Funkschnittstelle als digitale Sprachsignale an das drahtlose Kommunikationsendgerät übertragen. Weiterhin können bei der Ausgabe eine Kombination von Text, Grafik und Sprache realisiert werden. Dazu kann während der Bearbeitung der speziellen Internet-Seiten eine grobe Skizze als Grafik deklariert werden. Die Detail-Angaben sind dann per Sprachausgabe erreichbar. Die Internet-Seiten können nicht nur vom Teilnehmer sondern auch vom Netzwerk-Betreiber oder Dienst-Anbieter um die Sprachverarbeitung erweitert werden. Die auf diese Weise erweiterten Internet-Seiten werden dann nicht zusammen mit TeilnehmerDaten, sondern global verfügbar für alle Internet-Benutzer im Internet abgelegt. Beim Verbindungswunsch mit einer Internet-Seite wird der Teilnehmer gefragt, ob er eine Sprach-Erweiterung wünscht. Im positiven Fall werden die spracherweiterten Seiten geholt, sonst die normalen, wobei beide Seiten-Varianten im Internet-Server für alle Internet-Nutzer gespeichert sind:

Auch hinsichtlich Benutzerkomforts sind verschiedene Lösungen bekannt. Um beispielsweise auf einfache und komfortable Weise eine Verbindung zwischen dem Telefonnetz-Endgerät und einem an das Internet angeschlossenen Internet-Endgerät aufzubauen, ist aus der DE 100 01 077 A1 ein Verfahren, eine Dienst-Vermittlungsstelle, ein Dienst-Steuerknoten, ein Internet-Gateway, ein Programm-Modul sowie ein Internet-Endgerät bekannt, bei dem ein Teilnehmer an seinem Telefonnetz-Endgerät lediglich eine Teilnehmernummer eines an das Internet angeschlossenen Internet-Endgeräts seines Kommunikationspartners eingibt. Dann sendet das Telefonnetz-Endgerät eine Rufanforderung an das Telefonnetzwerk, das als ein sogenanntes Intelligentes Netz (IN) ausgebildet ist. Das Telefonnetzwerk leitet die Rufanforderung an eine so genannte Dienst-Vermittlungsstelle weiter, die auch SSP (Service Switching Point) bezeichnet wird. Die Dienst-Vermittlungsstelle ermittelt, dass die Rufanforderung als eine Rufanforderung für ein Intelligentes Netz zu behandeln ist und übermittelt eine Dienstanforderungsnachricht an einen Dienst-Steuerknoten, der auch als SCP (Service Control Point) bezeichnet wird. In der Dienstnachricht fordert die Dienst-Vermittlungsstelle bei dem Dienst-Steuerknoten einen Dienst zur Behandlung der in der Rufanforderung angegebenen Teilnehmernummer an. Der Dienst-Steuerknoten ermittelt eine der Teilnehmernummer zugeordnete Internet Adresse des Internet-Endgeräts und übermittelt eine Dienstnachricht mit der Internet-Adresse des Intemet-Endgetäts an die Dienst-Vermittlungsstelle. Daraufhin baut die Dienst-Vermittlungsstelle über das Telefonnetzwerk eine Ruf-Verbindung zu einem Internet-Gateway auf, über das die Ruf-Verbindung zwischen dem Telefonnetz-Endgerät und dem Internet-Endgerät aufgebaut werden kann. Die Dienst-Vermittlungsstelle sendet dem Internet-Gateway die Internet-Adresse des Internet-Endgeräts. Der Internet-Gateway baut den dann noch erforderlichen Verbindungsabschnitt der Ruf-Verbindung zwischen dem Telefonnetz-Endgerät und dem Internet-Endgerät über das Internet mit Hilfe der Internet-Adresse des Internet-Endgeräts auf. Der anrufende Teilnehmer muss also nur die "virtuelle" Teilnehmernummer des Internet-Endgeräts seines Kommunikationspartners kennen und an dem Telefonnetz-Endgerät eingeben, nicht jedoch dessen "physikalische" Internet-Adresse sowie die Rufnummer des Gateways. Dabei kann die Teilnehmernummer beispielsweise auch eine so genannte UPT-Nummer (Universal Personal Telecommunications) des Kommunikationspartners sein, unter der der Kommunikationspartner stets erreichbar ist. Da üblicherweise Internet-Adressen dynamisch vergeben werden, ist es möglich, dass der Gateway oder das Internet-Endgerät dem Dienst-Steuerknoten direkt oder über einen diesem übergeordneten so genannten Service Management Point (SMP) mitteilt, welche Internet-Adresse dem Internet-Endgerät momentan zugeteilt ist.

Um beispielsweise Kunden einen möglichst einfachen Zugang zu personalisierbaren Portal-Diensten zu ermöglichen, ist aus der DE 100 15 173 B4 ein Kundenidentifizierungsverfahren bekannt, bei dem vom Endgerät die Rufnummer über das Zugangsnetz zu einem so genannten Proxy-Server übertragen wird, welcher für die Protokoll-Umsetzung zwischen Zugangsnetz und Internet-(Intranet)Protokollen zuständig ist. In Abhängigkeit der Dienstanfrage (HTTP-Request) fügt der Proxy-Server eine Kunden-ID in die Dienstanfrage ein. Die Kunden-ID wird vom Proxy-Server aufgrund der MSISDN aus einem Kundenverzeichnis (z.B. LDAP) abgefragt. Als Alternative kann auch direkt die MSISDN verwendet werden. Am Portal wird die ID der Dienstanfrage entnommen und mit einer Abfrage im Kundenverzeichnis die Berechtigung des Kunden geprüft. Ist diese gegeben, wird die Dienstanfrage des Kunden beantwortet. Dieser Mechanismus wird bei jeder weiteren Dienstabfrage des Kunden wiederholt. Bei der ersten Dienstanfrage wird zusätzlich eine Session angelegt, um temporäre Daten des Kunden speichern zu können. Als Session-ID wird die Kunden-ID (bzw. alternativ die MSISDN) verwendet. Erfolgt keine weitere Interaktion durch den Kunden wird die Session nach Ablauf eines Timers beendet.

Um beispielsweise eine automatisierte Steuerung und Überwachung der Anbieterseitigen Abwicklung von Online-Kunden-Anfragen zu ermöglichen, ist aus der DE 100 14 717 A1 ein Verfahren zum Management einer Online-Kundenanfrage, die durch Zugriff eines Kunden über das Internet auf eine Web-Site eines Anbieters und durch Anklicken eines von mehreren auswählbaren Links zur Anforderung einer Produkt-Information oder eines Kontakts zu einem Mitarbeiter des Anbieters erfolgt, bekannt. Die Management-Software enthält Software-Agenten, insbesondere FindRecipient, SendEmail, Reminder, Response), und mittels auf dem zur Web-Site gehörenden Web-Server oder einem diesem nachgeschalteten Rechner erfolgt das Management programmgesteuert. Das Management der Online-Kundenanfrage läuft in folgenden Schritten ab:
- nachdem ein Kunde durch anklicken der Web-Site einen Anfrage-Prozess gestartet hat, präsentiert ein erster Software-Agent (FindRecipient) einen Fragebogen,
- nachdem der Kunde den Fragebogen (6) ausgefüllt zur Web-Site übermittelt hat, ermittelt der erste Software-Agent (FindRecipient) auf der Basis der im Fragebogen enthaltenen Parameter aus einer ersten Tabelle (Routing-Tabelle), die in einer Datenbank bereitgestellt ist, eine anbieterseitige Kontakt-Adresse, speichert diese zusammen mit der Anfrage in einer zweiten Tabelle (Contact-Request-Tabelle), die in der Datenbank vorhanden ist, und aktiviert einen zweiten Agenten (SendEmail),
- der, zweite Agent (SendEmail) sendet die Anfrage zur anbieterseitigen Kontakt-Adresse und veranlasst, dass der erste Software-Agent (FindRecipient) die anbieterseitige Kontakt-Adresse (4) zusammen mit Anfrage-Ankunftszeit-Angaben in der zweiten Tabelle (Contact-Request-Tabelle) speichert,
- ein dritter Agent (Reminder) überwacht, ob innerhalb einer in den Parametern enthaltenen Beantwortungsfrist durch einen vierten Agenten (Response) in einer dritten Tabelle (Response Tabelle), die in der Datenbank vorhanden ist, und in der Anfragen korrespondierend zur zweiten Tabelle (Contact-Request-Tabelle) gespeichert werden, zur jeweiligen Anfrage ein Erledigungs-Status gesetzt ist, und veranlasst, dass der zweite Agent (SendEmail) eine Erinnerungs-Nachricht an die anbieterseitige Kontakt-Adresse sendet, wenn bis zum Fristablauf keine Erledigung erfolgt ist.

Weiterhin sind zur Sicherstellung, dass auf jede Kunden-Anfrage eine zeitadäquate Antwort erfolgt, beim Verfahren gemäß der DE 100 14 717 A1 in einem so genannten Verfolgungs-Prozess Hilfsmittel bereitgestellt, um die Antworten an den Kunden automatisch zu verfolgen. Antwortet der Anfrage-Bearbeiter auf die Anwender-Anfrage nicht, bevor die eingestellte Bearbeitungsfrist oder der eingestellte Zeitintervall verstrichen ist, generiert der Reminder Agent eine Nachricht zur Erinnerung des Anfrage-Bearbeiters. Der Reminder Agent speichert Datum und Uhrzeit der Erinnerungs-Nachricht in die Reminder-Tabelle der Datenbank und setzt den Bearbeitungs-Status der Kunden-Anfrage in der Request-Tabelle der Datenbank auf "reminded". Durch das Speichern des Anfrage- und Verfolgungsstatus in der Datenbank, sind u. a. auch ein detaillierter Überblick und eine Analyse über die Historien von Anfragen und deren Antworten möglich.

Um beispielsweise unbenutzte Datenendeinrichtungen zu lokalisieren, also angerufen, welche sonst mangels Adresse im Datennetz unbekannt sind, ist aus der DE 100 02 997 A1 ein Verfahren zum Aufbau einer Verbindung über ein erstes Datennetz vom Typ Internet zwischen zwei Geräten dieses ersten Datennetzes und einem zweiten Fernsprechnetz bekannt, bei dem eines der beiden Geräte, das anruft, das andere über das zweite Fernsprechnetz anruft, um es zur besagten Kommunikation aufzufordern, sich das angerufene Gerät mit dem Verbindungsserver des ersten Datennetzes verbindet und eine Datenadresse empfängt, sich das angerufene Gerat mit einem Verbindungsserver des ersten Datennetzes verbindet, bei dem es sich zumindest mit seiner Datenverarbeitungsadresse und einem Kennzeichen, das dem anrufenden Gerät bekannt ist, registrieren lässt, sich das anrufende Gerät mit dem Server verbindet, ihm das Kennzeichen übermittelt und bei dem der Server ihm die Datenadresse des angerufenen Gerätes übermittelt, und das anrufende Gerät, das die Datenadresse des angerufenen Gerätes kennt, die besagte Verbindung herstellt. Das anrufende Gerät übermittelt dem angerufenen Gerät zumindest eine Meldung zur Identifizierung des anrufenden Gerätes, um es zur besagten Kommunikation aufzufordern. Daher kann das angerufene Gerät den anrufenden Teilnehmer identifizieren und entsprechend dieser Kennzeichnung selbst entscheiden, ob es den Verbindungsaufbau über Internet weiter herstellen will oder nicht. Das angerufene Gerät kann auch die Identifizierungsmeldung des anrufenden Gerätes erkennen, ohne den eingehenden Telefonanruf zu beantworten, und das angerufene Gerät ruft daraufhin den Server an, oder das angerufene Gerät empfängt die Identifizierungsmeldung und antwortet dann auf den Telefonanruf, und das anrufende Gerät sendet ihm eine Bestätigungsmeldung mit der Aufforderung, damit das angerufene Gerät den Server anruft. Ein Verbindungsserver enthält hierzu Mittel zur Verbindung mit dem Datennetz, die dazu bestimmt sind, mit den Geräten Daten mit einer Datenverarbeitungsadresse und Kennzeichen von Geräten auszutauschen, wobei die Verbindungsmittel mit Datenverarbeitungsmitteln verbunden sind, die dazu bestimmt sind, die Paare - bestehend aus einer Datenverarbeitungsadresse und dem von den Geräten stammenden Kennzeichen - zu erfassen und als Antwort dem Gerät, das den Server durch Senden eines Kennzeichens eines Paares konsultiert, die Datenverarbeitungsadresse zu liefern, die in dem Paar enthalten ist. Der Server zeichnet sich dadurch auszeichnet, dass die Datenverarbeitungsmittel dazu bestimmt sind, die Datenverarbeitungsadresse eines Gerätes, das den Server konsultiert, zu empfangen und eine Tabelle zu verwalten, in der die Datenverarbeitungsadressen von zwei kommunizierenden Einrichtungen angegeben sind. Weiterhin sind die Datenverarbeitungsmittel dazu bestimmt, von den Einrichtungen Daten über die Beendigung der Verbindung zu empfangen und die Tabelle entsprechend zu löschen

Um neben dem bildschirmorientierten Zugang zu Informationen auf Datenträgern einen sprachorientierten Zugang zu ermöglichen, ist aus der aus der EP 1 066 714 A1 (WO 99/45691) ein System mit clustern von Voice Servern und Web Servern bekannt, bei dem den Benutzer vom Diensteanbieter eine spezielle Rufnummer zugeordnet wird.

Schließlich ist für den bildschirmorientierten/sprachorientierten Zugang aus der EP 1 344 370 A1 (WO 02/052810 A1) eine Kommunikationsanordnung mit einem Webserver, zumindest einem Sprachagenten und mit einem Kommunikations-Agenten bekannt. Der Webserver ist mit einer Multimediaplattform und einem Internetendgerät verbindbar, wobei im Rahmen einer Internetverbindung zumindest teilweise sprachorientierte Webseiteninformationen an die Multimediaplattform und bildschirmorientierte Webseiteninformationen an das Internetendgerät übermittelt werden. Die Sprachagenten in der Multimediaplattform und im Internetendgerät führen für Sprachinformationen einen direkten Kommunikationsaustausch durch. Der im Internetendgerät angeordnete Kommunikations-Agenten dient zum wechselseitigen Beeinflussen von Bearbeitungsfunktionen der sprachorientierten Webseiteninformationen und zur Synchronisation der sprachorientierten und der bildschirmorientierten Webseiteninformationen durch die Übermittelung von Steuer- und Dateninformationen. Die Bearbeitung der Sprachinformationen in der Multimediaplattform, die Ausgabe der bearbeiteten Sprachinformationen im Internetendgerät und die Übermittlung und das Starten von neuen Webseiteninformationen ist durch Austausch von Steuerinformationen beeinflussbar und die konvertierte Sprachinformation ist direkt zwischen dem Internetendgerät und der Multimediaplattform austauschbar. Der bildschirmorientierte Teil kann beispielsweise in der HTML- (hypertext markup language) Programmiertechnik erstellt sein und enthält in der Regel Verweise auf den sprachorientierten Teil, die erlauben, von der Bearbeitung des bildschirmorientierten Teils zur Bearbeitung des sprachorientierten Teils zu wechseln. Durch den auf dem Internetendgerät installierten Browser/Parser wird nicht nur der bildschirmorientierte Teil bearbeitet und interpretiert, sondern werden auch die Verweise auf den sprachorientierten Teil interpretiert und gegebenenfalls wird das Übermitteln von Steuerinformationen und/oder Daten für den Übergang zur Bearbeitung oder die Ausgabe von Sprachinformationen eingeleitet. Die Bearbeitung und Interpretation des bildschirmorientierten Teils und des sprachorientierten Teils durch den Browser des Internetendgeräts bzw. den Sprach-Browser der Multimediaplattform wird durch den Austausch von Steuerinformationen synchronisiert. Um die beiden Teile in einem Quellcode zu vereinigen, kann vorgesehen werden, dass entweder das Internetendgerät und die Multimediaplattform mit Browsern versehen sind, die denselben, bildschirm- und sprachorientierte Webseiteninformationen vereinigenden Quellcode bearbeiten und interpretieren können, oder dass nur ein Browser in dem Internetendgerät PC vorgesehen ist, der gegebenenfalls durch einen zusätzlichen Kommunikations-Agenten in der Multimediaplattform ergänzt wird.

Weiterhin ist aus der US 2004/117804 A1 ein verbessertes multimodales Interface auf der Basis multimodaler Eingabegeräte zur Synchronisation von Anwendungsprogrammen bekannt. Durch diese multimodalen Eingabegeräte sollen die Nachteile unimodaler Eingabegeräte mit einer zentralisierten Dialogsteuerung vermieden werden. Dies würde im Falle unimodaler Endgeräte bedeuten, dass wenn nach dem Verbindungsaufbau zu einer zentralisierten Steuerung mit einem IVR-System, einem Internet Server und einem Web Server/Synchronisations-Manager, keine multi-modale Session eingeleitet wird, die Verbindung nach einer gewissen Zeit, beispielsweise 5 bis 10 Minuten, beendet wird. Deshalb sind beispielsweise Telefon und Computer mit Bildschirm, Tastatur und Modem oder Netzwerkkarte zum Zugang zum Internet über Browser für die Durchführung einer multimodalen Session am Arbeitsplatz des Benutzers zusammen angeordnet. Der Synchronisations-Manager nimmt dabei keine Steuerung der Dialoge innerhalb der einzelnen Anwendungsprogramme vor, sondern ist ein Router und ein Protokollumsetzer für die Information zwischen Anwendungsprogrammen. Dabei ist eines oder mehrere der Anmeldungsprogramme ein Web-Browser. Die Synchronisation-Software hat die Fähigkeit, neue Anwendungsprogramme in die Gruppe von Anmeldungen einzufügen, oder eine vorhandene Anmeldung von der Anmeldungs-Gruppe während einer multimodalen Anmeldung zu entfernen. Das aus der US 2004/117804 A1 bekannte multimodale Interface betrifft einen speziellen Dienst - nämlich dem IVR Service 22 - mittels dem grafische und/oder textuelle Darstellungen, insbesondere Webseiten aus dem Internet abrufbar sind und bei welchem der Zugang über die Kombination von PIN-Eingabe, Passwort und Telefonnummer zur Identifizierung des Benutzers möglich ist.

Weiterhin ist aus der US 2003/005076 A1 ein verbessertes intelligentes Netzwerk (Advanced Intelligent Network AIN) mit AIN-Komponenten und Internet-basierten Ressourcen bekannt, welches einen multimodalen Zugriff auf der Basis multimodaler Eingabegeräte ermöglicht, um gleichzeitig einen visuellen und telefonischen Zugang zu einem interaktiven Informationssystem zur Verfügung zu stellen. Dadurch werden herkömmliche Interactive Voice Response (IVR)-Systeme verbessert, indem visuelle Informationen, die der sprachbasierten Informationen entsprechen und die per Telefon geliefert werden, zur Verfügung gestellt werden. Einem Benutzer, der in Kontakt mit einem herkömmlichen IVR-Service-Provider (IVR-Host) ist, kann dadurch eine Visual IVR (VIVR)- Sitzung zur Verfügung gestellt werden. Die VIVR-Sitzung kann in Form von HTML-formatierten Webseiten visuelle Informationen für den Benutzer bereitzustellen, welche über eine Internetverbindung geliefert werden. Weiterhin werden hörbare Nachrichten/ Informationen über eine herkömmliche drahtlose oder drahtgebundene Sprachtelefonverbindung bereitgestellt. Eine VIVR-Sitzung kann die Lieferung von visueller Information (beispielsweise Web-Seiten) und die Lieferung von telefoniebasierten Informationen (beispielsweise Audio-Dateiwiedergabe) koordinieren, so dass der Benutzer eine akustische Meldung am Telefon hört, die einer am Netzwerk-Gerät angezeigten Informationen entspricht. Der Benutzer kann Anweisungen an einen VIVR-Server entweder über das Telefon oder über das Netzwerkgerät (z.B. ein Computer, der mit einem herkömmlichen Web Browser läuft) geben. Der VIVR-Server reagiert auf
die Anweisungen, indem entweder die Telefonverbindung oder InternetVerbindung empfangen wird. Diese Integration im AIN-System ermöglicht die gleichzeitige Zustellung der visuellen Information über das Internet und der Sprachinformation über eine Telefonverbindung.

Schließlich ist aus der US-A-5 912 952 ein verbessertes Sprach-Antwort-Gerät (Voice Response Unit VRU) bekannt, welches visuelle Informationen sowie Sprachinformationen an den Kunden sendet und eine Einstellung auf die jeweiligen multimodalen Endgeräte ermöglicht. Hierfür stehen zwei Informationskanäle zur Verfügung und das verbesserte Sprach-Antwort-Gerät VRU bzw. Multimedia-Antwort-Einheit (MRU) ermöglicht auch eine bequeme Verknüpfung, in Reaktion auf eine entsprechende Auswahl durch den Kunden. Das MRU ist in der Lage, visuelle Information sowie Sprachinformation zum Kunden zu senden und lässt durch eine hierarchische Menü-Struktur die bequeme Verbindung zu physikalisch verschiedenen MRUs oder VRUs zu.

Wie die vorstehende Würdigung des Standes der Technik aufzeigt, sind unterschiedlich ausgestaltete Verfahren und Vorrichtungen zum Aufbau einer Kommunikationsverbindung über ein Telekommunikationsnetz mit Telefonnetz und Datennetz bekannt. Dabei sind in der Regel spezielle Hard- und Softwarekomponenten mit einer Reihe von teuren, für die Kommunikation speziell ausgelegten Komponenten, wie Kommunikations-Server/Gateway für die Verbindung zu einem anderen Netz (öffentliches Datennetz, anderes LAN oder einem Hostsystem), insbesondere zur interaktiven Kommunikationsverbindung zwischen dem Benutzer des Telefons und dem Informations-Server auf rein sprachlicher Ebene bzw. Fileserver, welcher die Daten verwaltet und diese dem Teilnehmer im Netz zur Verfügung stellt, sowie entsprechende Netzwerk-Zugangsprotokolle, z.B. CSMA/CD (Carrier Sense Multiple Access/Collision Detection), Token-Passing (Bitmuster als Berechtigungsmarke) oder TCP/IP (Transmission Control Protocol/Internet Protocol) erforderlich. Wenig Beachtung findet jedoch die Berücksichtigung der beim Benutzer vorhandenen Ausstattung, um darauf basierend eine individuelle und komfortable Benutzerführung zu ermöglichen. Deshalb fehlen in der Praxis kostengünstige Verfahren und Systeme für den kombinierten Telefon-Internet-Zugang, welche eine individuelle, insbesondere automatisch anpassbare, interaktive Kommunikation sicherstellen. Besonders bedeutsam ist dies, weil die Telekommunikations- und Computerindustrie als äußerst fortschrittliche, entwicklungsfreudige Industrien anzusehen sind, die sehr schnell Verbesserungen und Vereinfachungen aufgreifen und in die Tat umsetzen.

Der Erfindung liegt die Aufgabe zugrunde, ein Verfahren und eine Vorrichtung zur losen Kopplung eigenständig arbeitender WEB- und Sprachportale derart auszugestalten, dass der Anschluss beliebiger Endgeräte mit individueller, interaktiver Kommunikation ermöglicht wird. Die Erfindung ist bestimmt durch die anhängenden Ansprüche. Ausführungsformen und/oder Beispiele in der folgenden Beschreibung, welche nicht durch die anhängenden Ansprüche abgedeckt sind, werden nicht als Teil der vorliegenden Erfindung betrachtet.

Diese Aufgabe wird erfindungsgemäß bei einem Verfahren zur Kopplung eigenständig arbeitender WEB- und Sprachportale in einem Telekommunikationsnetz mit Telefonnetz und Datennetz, mit Vermittlungsstellen und mit analogen oder digitalen Endgeräten, welche über eine Teilnehmeranschlussschaltung und über die Teilnehmeranschlussleitungen mit der Vermittlungsstelle in Verbindung stehen, oder mit digitalen Endgeräten, welche über jeweils ein Teilnehmermodem und Splitter oder über jeweils einen Netzabschluss und über die Teilnehmeranschlussleitungen mit der Vermittlungsstelle in Verbindung stehen, wobei ein mit dem Telekommunikationsnetz in Verbindung stehender multimodaler Dialogserver, welcher einen Voiceserver, einen Web-Server und eine Dialogsteuerung aufweist, vorgesehen ist, gemäß Patentanspruch 1 gelöst, bei dem:
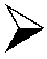 der Voiceserver, für die Erzeugung bzw. Annahme einer Audio-Session zuständig ist,
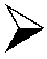 der Web-Server für die Realisierung visueller Sessions zuständig ist und
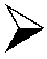 ein Dialog zwischen einem Benutzer eines der Endgeräte und der Dialogsteuerung des multimodalen Dialogserver nach Maßgabe einer dem Benutzer genannten WEB-Adresse und Session-ID in Abhängigkeit von durch Interaktionen des Benutzers erzeugter Ereignisse durchgeführt wird,
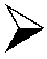 die Dialogsteuerung den Bandbreitenbedarf für die Informationsübertragung zu dem jeweiligen Endgerät ermittelt und nach dessen Maßgabe automatisch weitere Kommunikationskanäle zuschaltet,
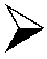 so dass eine dynamische Kanalverwaltung und Bandbreitensteuerung erzielt wird und dass alle Spracheingaben und alle Wechsel der WEB-Seiten spezielle Ereignisse erzeugen, die von der Dialogsteuerung des multimodalen Dialogserver ausgewertet werden und den Ablauf des Dialoges beeinflussen.

Das erfindungsgemäße Verfahren ermöglicht auf einfache Art und Weise einen multimodalen Dialogaufbau und eine multimodale Steuerung. Insbesondere wird dem Benutzer eine individuelle, interaktive Kommunikation ermöglicht und ein Mehrwert des Dialoges durch die Nutzung des Internets suggeriert. Im Vergleich zum Stand der Technik "gestaltet" der Benutzer den Dialog entsprechend seiner Anforderungen selbst, ohne dass der Hersteller des Endgeräts eine Auswahl zwischen dem Endgerät zugeordneten Funktionen treffen muss. Weiterhin ist von Vorteil, dass eine einfache Erweiterung oder Veränderung des Dialogs einschließlich der Bildung neuer Funktionen und eine wesentliche Steigerung des Einsatzbereiches ermöglicht wird. Schließlich ist durch die parallele und inhaltsgleiche Informationsübertragung es auch ungeübten Benutzern ermöglich eine effiziente, interaktive Dialogsteuerung vorzunehmen.

Weiterhin wird diese Aufgabe erfindungsgemäß nach Patentanspruch 7 bei einer Vorrichtung zur Kopplung eigenständig arbeitender WEB- und Sprachportale in einem Telekommunikationsnetz mit Telefonnetz und Datennetz, mit Vermittlungsstellen und mit analogen Endgeräten, welche über eine Teilnehmeranschlussschaltung und über die Teilnehmeranschlussleitungen mit der Vermittlungsstelle in Verbindung stehen, oder mit digitalen Endgeräten, welche über jeweils ein Teilnehmermodem und Splitter oder über jeweils einen Netzabschluss und über die Teilnehmeranschlussleitungen mit der Vermittlungsstelle in Verbindung stehen, und welche einen mit dem Telekommunikationsnetz in Verbindung stehenden multimodalen Dialogserver aufweist, welcher einen Voiceserver, einen Web-Server und eine Dialogsteuerung aufweist:
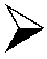 wobei der Voiceserver für die Erzeugung bzw. Annahme einer Audio-Session dient,
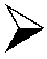 wobei der Web-Server für die Realisierung visueller Sessions dient und
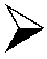 wobei die mit dem Voiceserver und dem Web-Server verbundene Dialogsteuerung den Bandbreitenbedarf für die Informationsübertragung zu dem jeweiligen Endgerät ermittelt und nach dessen Maßgabe automatisch weitere Kommunikationskanäle zuschaltet, und bei welcher alle Spracheingaben und alle Wechsel der WEB- Seiten spezielle Ereignisse erzeugen, die von der Dialogsteuerung des multimodalen Dialogserver ausgewertet werden und den Ablauf des Dialoges beeinflussen,
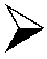 so dass einem Benutzer eines der Endgeräte eine individuelle, interaktive Kommunikation ermöglicht wird,
gelöst.

Im Vergleich zu den Vorrichtungen zum Aufbau einer Kommunikationsverbindung über ein Telekommunikationsnetz mit Telefonnetz und Datennetz nach dem Stand der Technik weist die erfindungsgemäße Vorrichtung den Vorteil auf, dass trotz Ermöglichung eines hohen Benutzerkomforts eine kostenintensive Vorab-Installation im Endgerät nicht erforderlich ist. Der einfache Einsatz der erfindungsgemäßen Vorrichtung/Verfahren ist infolge der flexiblen Kommunikations-Mechanismen für viele Anwendungen und Systemarchitekturen auf überraschend einfache und kostengünstige Art und Weise möglich.

Dadurch, dass die Dialogsteuerung die Prüfung des Bandbreitenbedarfs automatisch vornimmt, sind die Benutzer von der Überprüfung der zur Verfügung stehenden Bandbreite bei Inbetriebnahme oder während des Betriebs entlastet. Je nach Bedarf an Bandbreite, d.h. abhängig von der Menge zu transportierender Daten, schaltet die Dialogsteuerung automatisch weitere Kommunikationskanäle zu. Durch Parallelbetrieb beispielsweise aller 30 B-Kanäle können Übertragungsgeschwindigkeiten bis 1,92 Mbit/s erzielt werden. Das Hardware-Konzept der Dialogsteuerung kann auf die vielfältigen, gewachsenen Anschlussnormen im weltweiten Netzwerkbetrieb angepasst werden. Der dabei ablaufende iterative Prozess hinsichtlich Bandbreitentests umfasst alle sinnvoll vorkommende Bitraten, welche entsprechend hinterlegt sind, kann insbesondere auch bei inhomogenen Strukturen eingesetzt werden und erlaubt auch ein Netzmonitoring mit Einschluss des Arbeitsplatzes und der Endgeräte.

In Weiterbildung der Erfindung ist, gemäß Patentanspruch 2, das Verfahren gekennzeichnet durch die multimodalen Dialogelemente:
- Ausgabe einer Audio-Information,
- Aufzeichnen einer Audio-Information,
- Definieren einer Grammatik für die Benutzerinteraktion,
- Anzeige einer WEB- Seite,
- Hervorheben von Passagen einer WEB- Seite.

Diese Weiterbildung der Erfindung weist den Vorteil auf, dass der Dialog zwischen dem Benutzer und dem Dialogserver in seiner groben Struktur mit Hilfe eines speziellen Werkzeuges definiert und - ohne Interaktionen des Benutzers - diese vordefinierte Aufeinanderfolge von Dialogelementen in der vordefinierten Reihenfolge ausgeführt werden kann.

Vorzugsweise nutzt, gemäß Patentanspruch 3, die Dialogsteuerung die Übertragungspausen der Datenkommunikation zur Sprachkommunikation.

Wählverbindungen werden nach einem entfernungsabhängigen Zeitraster tarifiert. Um Leerlaufzeiten zu vermeiden, baut bei Übertragungspausen der Datenkommunikation größer als eine einstellbare Wartezeit (Shorthold), die Dialogsteuerung automatisch die Verbindung ab und stellt, sobald Daten anliegen, den Verbindungsaufbau wieder her. Mit einer optionalen Kompression kann weiterhin der Datenverkehr reduziert werden.

Bei einer bevorzugten Ausgestaltung der Erfindung ist, gemäß Patentanspruch 4, in der Dialogsteuerung die Session-ID als Zugangsberechtigung abgespeichert, wodurch die Steuerung von Verbindungsaufbau und -ablauf gegen unbefugten Zugriff gesichert ist und die Dialogsteuerung protokolliert den Dialog.

Diese Ausgestaltung der Erfindung weist den Vorteil auf, dass nach Maßgabe der Session-ID, der Zugriff nur durch das damit betraute Personal erfolgen kann. Es ist auch möglich, den Zugang zu verschiedenen Gruppen von Prozessen mit verschiedenen Zugangscodes zu sichern, um so innerhalb des Personals die Zuständigkeiten abzugrenzen oder unterschiedlich zu verteilen. Beispielsweise können auch CUG (closed user group) gebildet werden, so dass ein Hacker-Zugriff weitgehend ausgeschlossen ist, da die Dialogsteuerung nur Daten von signierten Personen abnimmt und die Synchronisation über die Session-ID läuft.

In Weiterbildung der Erfindung testet, gemäß Patentanspruch 6, die Dialogsteuerung die ihr zur Verfügung stehenden Protokolle in Kommunikation mit dem jeweiligen Endgerät durch und stellt sich auf das von dort angebotene Protokoll ein.

Diese Weiterbildung der Erfindung weist den Vorteil auf, dass die typischen "time out- Probleme" vermieden werden und die Dialogsteuerung die Verbindung auch dann halten kann, wenn nur der Audioanteil der Information und ggf. ein Teil der Bildinformation ankommen und dargestellt werden können. Demzufolge kann der Audiodialog weitergehen bis eine neue Seite zur Verfügung steht, wobei die Synchronisation mit dem Audio Dialog erfolgt, alternativ ist auch nur Audio Dialog möglich.

Bei einer bevorzugten Ausgestaltung der Erfindung sind, gemäß Patentanspruch 8, an die Dialogsteuerung ein Dialogspeicher, an den Voiceserver ein Audiospeicher und an den WEB-Server ein Bildspeicher jeweils angeschlossen.

Diese Ausgestaltung der Erfindung weist den Vorteil auf, dass auf überraschend einfache Art und Weise dem Benutzer ein hoher Bedienkomfort zur Verfügung gestellt werden kann und beispielsweise ein Mehrwert des Dialoges durch die Nutzung des Internets suggeriert werden kann.

Vorzugsweise weist, gemäß Patentanspruch 9, zur Konfiguration die Dialogsteuerung eine Schnittstellenschaltung und/oder ein Bus-Interface auf.

Damit ist es auch möglich, von jedem beliebigen Punkt des Telekommunikationsnetzes aus die Konfiguration mittels PC/Webserver bzw. mittels Laptop mit Funkschnittstelle durchzuführen, durch Nutzung standardisierter Funk/Netzwerkkomponenten mit flächendeckender Verfügbarkeit für die Datenkommunikation ist die erfindungsgemäße Vorrichtung unabhängig von anderen technischen Gegebenheiten universell einsetzbar und kann für den jeweiligen Anwendungsfall automatisch umkonfiguriert werden.

Weitere Vorteile und Einzelheiten lassen sich der nachfolgenden Beschreibung einer bevorzugten Ausführungsförm der Erfindung unter Bezugnahme auf die Zeichnung entnehmen. In der Zeichnung zeigt:
- **FIG. 1**: die Netzstruktur mit der erfindungsgemäßen Vorrichtung zur Realisierung des erfindungsgemäßen Verfahrens,
- **FIG. 2**: das Ablaufdiagramm für ein Beispiel eines multimodalen Dialogaufbaus und
- **FIG. 3 a, b**: das Ablaufdiagramm für eine multimodale Steuerung und eine Auswertung von benutzerdefinierten Interaktionen nach **FIG. 2****.**

Die Mehrzahl von Verbindungen zum Internet oder zu anderen Datendiensten wird mit Modems über ein Telefonkabel, d.h. eine Kupferdoppelader (so genanntes a/b Adernpaar bzw. Teilnehmeranschlussleitung), hergestellt, welches eigentlich zur Sprachübertragung im Bereich vom etwa 300 Hz bis 3400 Hz vorgesehen ist (POTS).

Um ein Höchstmass an Übertragungssicherheit zu gewährleisten, wird in zunehmendem Maße die bestehende analoge Übertragungstechnik durch die digitale Übertragungstechnik ersetzt. Bei der drahtgebundenen Übertragungstechnik kommen dabei vorwiegend Systeme zum Einsatz, welche nach dem Standard für "Integrated Services Digital Network", kurz ISDN, arbeiten.

Mit Hilfe einer Frequenzweiche, zum Beispiel einer Splittermatrix, werden Sprache und Daten in der Regel durch passive Tiefpass- bzw. Hochpassfilter getrennt und auf das Telefonkabel gegeben (beispielsweise für ein DSL-Übertragungsverfahren). , Die Sprachanschlüsse gehen auf eine klassische Vermittlungsstelle, die als PSTN (Public Switched Telefon Network) bezeichnet wird, und die Daten gehen nach dem Splitter auf einen DSLAM (Digital Subscriber Line Access Multiplexer - ein Gerät, welches die Signale mehrerer DSL-Leitungen in einen Breitbandkanal umsetzt). Eine scharfe Trennlinie zwischen herkömmlichen Telekommunikationsnetzen und Computer-Datennetzen kann an dieser Stelle daher nicht gezogen werden. An beiden Leitungsenden der Verbindung werden DSL-Modems als das wichtigste Element für eine DSL-Verbindung angeschaltet.

Im DSLAM kann beispielsweise die ADSL-Technik (Asymmetrie Digital Subscriber Line, asymmetrisches DSL-Datenübertragungsverfahren) genutzt werden. Darunter wird eine Übertragungstechnik verstanden, die mit hoher Bandbreite sowohl Plain Old Telefon Services (POTS) oder ISDN für die Gesprächsübertragung als auch einen unsymmetrischen Multimediadienst ohne Regeneratoren auf dem gleichen Adernpaar störungsfrei zulässt. Asymmetrisch (ADSL) deshalb, weil in der Richtung vom Nutzer zum Netz (upstream) die Übertragung relativ niederratig (beispielsweise mit ca. 800 KBit/s), in der Richtung vom Netz zum Nutzer (downstream) hingegen relativ hochratig (beispielsweise mit bis zu ca. 8 MBit/s) erfolgt. Neben der ADSL-Technik sind auch andere DSL-Techniken gebräuchlich, beispielsweise HDSL = High Data Rate Digital Subscriber Line; SDSL = Single Line Digital Subscriber Line; MDSL = Multirate Digital Subscriber Line; RADSL = Low Rate Adaptive Digital Subscriber Line und VDSL = Very High Rate Digital Subscriber Line, die jede für den Anwendungsfall optimiert sind und unter dem Oberbegriff xDSL-Übertragungstechnik zusammengefasst werden.

Eine weitere Möglichkeit kontinuierliche Datenströme, z.B. Sprach- oder Videokommunikation, kostengünstig übermitteln zu können, bieten paketvermittelnde Kommunikationsnetze, wie z.B. LANs (Local Area Networks), MANs (Metropolitan Area Networks) oder WANs (Wide Area Networks). Auf dieser Technik basiert beispielsweise die sogenannte Intemettelephonie, die häufig auch als "Voice over Internet Protocol" (VoIP) bezeichnet wird.

Die Kommunikation erfolgt dabei über Verbindungen ganz unterschiedlicher Bandbreite, d.h. beispielsweise 56 KBit Analoganschluss oder 64 KBit -ISDN oder DSL oder - soweit in einem LAN eingebunden - über 100 MBit Twisted Pair-Leitung, oder über WählVerbindungen 2 MBit und besser, oder über Standleitungen X.25. Dementsprechend ist eine ganze Vielzahl von Schnittstelleneinrichtungen bekannt, beispielsweise
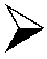 ISDN S₀ - Schnittstellen,
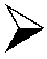 LAN-Interface FE (mit Programmspeicher) zum PCI-Bus,
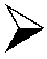 externes LAN-Interface LAN (mit Programmspeicher) als 10/100 Mbit/s Ethernet oder Token-Ring,
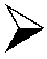 WAN-Schnittstellen WAN: X.21, V.35, G.703/704 bis 2 Mbit/s.

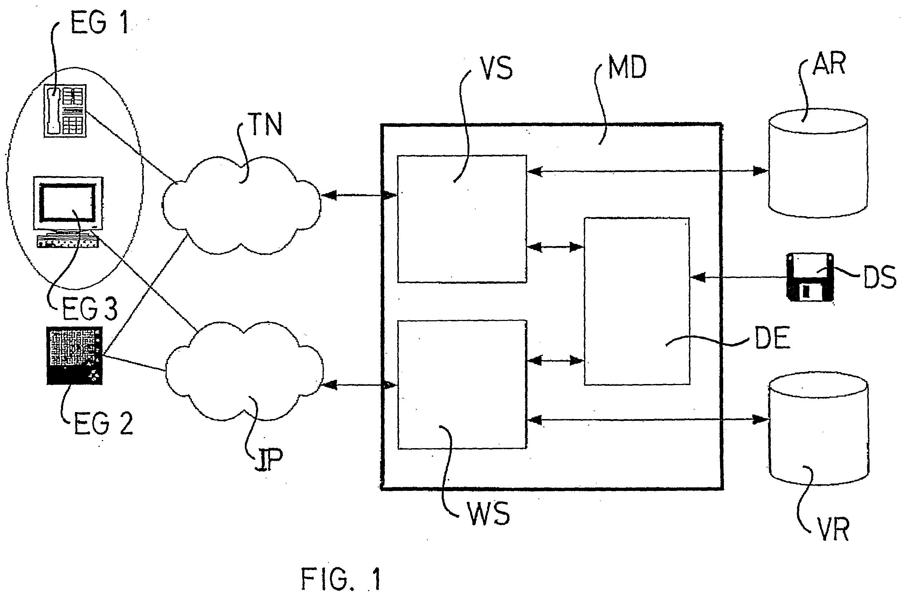

**FIG. 1** zeigt die Netzstruktur eines Telekommunikationsnetz mit Telefonnetz TN und Datennetz IP und mit analogen oder digitalen Endgeräten EG1, EG2, EG3. Die Endgeräte EG1, EG2, EG3 stehen über eine Teilnehmeranschlussschaltung und/oder einem Teilnehmermodem und Splitter und/oder einem Netzabschluss und über die Teilnehmeranschlussleitungen mit den Vermittlungsstellen in Verbindung. Weiterhin ist erfindungsgemäß ein mit dem Telekommunikationsnetz in Verbindung stehender multimodaler Dialogserver MD vorgesehen, welcher einen Voiceserver VS für die Erzeugung bzw. Annahme einer Audio-Session, einen Web-Server WS für die Realisierung visueller Sessions und eine mit dem Voiceserver VS und dem Web-Server WS verbundenen Dialogsteuerung DE aufweist.

Weiterhin ist an die Dialogsteuerung DE ein Dialogspeicher DS, an den Voiceserver VS ein Audiospeicher AR und an den WEB-Server WS ein Bildspeicher VR jeweils angeschlossen. Zur Konfiguration weist die Dialogsteuerung DE eine Schnittstellenschaltung und/oder ein Bus-Interface auf. Damit ist es auch möglich, von jedem beliebigen Punkt des Telekommunikationsnetzes aus die Konfiguration mittels PC/Webserver bzw. mittels Laptop mit Funkschnittstelle (GSM bzw. bei höheren Bandbreiten UMTS Universal Mobile Telecommunication System, welches eine Datenübertragungsgeschwindigkeit bis zu 2 MBit/s ermöglicht) durchzuführen, wobei die Netzanbindung über eine IP-Schnittstelle (auch paketvermitteltes Netz) erfolgen kann.

Voiceserver VS und Web-Server WS können von den Endgeräten EG1, EG2, EG3 über verschiedene Schnittstellen erreicht werden. Folgende Protokolle werden an den Schnittstellen unterstützt EDDS1, Q-Sig, SIP, H.323, HTTP, HTTPS. Beide Session-Varianten, d.h. Voiceserver VS und Web-Server WS, können auch losgelöst von einander genutzt werden.

Die erfindungsgemäße Vorrichtung unterstützt sowohl Endgeräte, welche beide Session-Varianten beinhalten (d.h. EG2), als auch zwei getrennte Endgeräte, nämlich das Audio-Endgerät EG1 (beispielsweise Telefon) und das visuelle Endgerät EG3 (beispielsweise PC). Im zweiten Fall sind zwei Verbindungen zum Dialogserver MD notwendig und werden durch eine gemeinsame Session-ID synchronisiert.

Ein typischer Anwendungsfall ist die telefonische Benutzung eines Sprachportals, welches dem Benutzer einen Mehrwert des Dialoges durch die Nutzung des Internets suggeriert. Hierfür wird dem Anrufer die zu benutzende WEB-Adresse und Session-ID genannt. Die visuelle Session wird dann von einem WEB-Browser (Software-Tool zum Suchen und Lesen von Webseiten; die bekanntesten sind Microsoft Internet Explorer oder Netscape Navigator) aus aufgebaut. Alternativ kann natürlich auch beim Betätigen eines Buttons einer WEB-Seite ein gezielter telefonischer Rückruf erfolgen.

Der Dialog zwischen dem Benutzer und dem Dialogserver MD wird in seiner groben Struktur mit Hilfe eines speziellen Werkzeuges definiert. Ohne Interaktionen des Benutzers wird diese vordefinierte Aufeinanderfolge von Dialogelementen in der vordefinierten Reihenfolge ausgeführt. Die wichtigsten multimodalen Dialogelemente sind:
- Ausgabe einer Audio-Information,
- Aufzeichnen einer Audio-Information,
- Definieren einer Grammatik für die Benutzerinteraktion,
- Anzeige einer WEB- Seite (Link durch URL Universal Resource Locator),
- Hervorheben von Passage einer WEB- Seite.

Alle Interaktionen des Benutzers werden durch Ereignisse dem Dialog zugeführt. Alle Spracheingaben und alle Wechsel der WEB- Seiten erzeugen spezielle Ereignisse, die vom Dialogserver MD ausgewertet werden und den Ablauf des Dialoges beeinflussen können.

Ein wesentliches Merkmal der Erfindung ist das Konzept der einheitlichen Darstellung und Bearbeitung des Dialogablaufes für beide Betriebsarten.

Vorzugsweise nutzt die Dialogsteuerung DE die Übertragungspausen der Datenkommunikation zur Sprachkommunikation.

Weiterhin ist vorgesehen, in der Dialogsteuerung DE die Session-ID als Zugangsberechtigung abzuspeichern, wodurch die Steuerung von Verbindungsaufbau und -ablauf gegen unbefugten Zugriff gesichert ist und dass die Dialogsteuerung DE den Dialog protokolliert. Innerhalb der Session-ID ist auch möglich, den Zugang zu verschiedenen Gruppen von Informationen/Prozessen mit verschiedenen Zugangscodes zu sichern, um so die Zugriffsmöglichkeiten abzugrenzen oder unterschiedlich zu verteilen. Weitere Sicherheitsmechanismen können sein: IP-Paketfilter, Call Back; Identification control, PAP (password authentification protocoll), CHAP (challenge authentification protocoll) und Kryptisierung. Gerade die zuletzt genannte Verschlüsselung ist immer noch das wirksamste Mittel im Datenschutz, um Informationen in falschen Händen unverwertbar zu machen; beispielsweise kann in der Dialogsteuerung DE ein Kryptisierungsverfahren nach dem DES-Standard vorgesehen werden.

Weiterhin ist vorgesehen, dass die Dialogsteuerung DE den Bandbreitenbedarf für die Informationsübertragung zu dem jeweiligen Endgerät EG1, EG2, EG3 ermittelt und nach dessen Maßgabe automatisch weitere Kommunikationskanäle zuschaltet, wodurch eine dynamische Kanalverwaltung und Bandbreitensteuerung erzielt wird. Je nach Bedarf an Bandbreite, d.h. abhängig von der Menge zu transportierender Daten, schaltet die Dialogsteuerung DE automatisch weitere Kommunikationskanäle zu. Durch Parallelbetrieb beispielsweise aller 30 B-Kanäle können Übertragungsgeschwindigkeiten bis 1,92 Mbit/s erzielt werden.

Weiterhin ist vorgesehen, dass die Dialogsteuerung DE die ihr zur Verfügung stehenden Protokolle in Kommunikation mit dem jeweiligen Endgerät EG1, EG2, EG3 durchtestet und sich auf das von dort angebotene Protokoll einstellt. Das Hardware-Konzept des Dialogservers MD kann auf die vielfältigen, gewachsenen Anschlussnormen im weltweiten Netzwerkbetrieb angepasst werden. Speziell angepasste LAN-Module mit wahlweise BNC-, AUI-, LWL- oder Twisted Pair-Anschlüssen verbinden den Dialogserver MD mit lokalen Token-Ring- und Ethernet-Netzwerken. Die Zugänge zu den Weitverkehrsnetzen (z.B. ISDN, X.25) und Standleitungen werden mit zum Teil mehrkanaligen WAN-Adaptern (S_{O}, U_{PO}, U_{KO}, X.21, V.24, V.35) geschaffen. Für die optimale Performance können aktive WAN-Adapter eingesetzt werden. Im ISDN-Bereich sind die Protokolle DSS1, 1TR6, N1-1, sowie Fetex 150 verfügbar.

Die Funktionen zur Steuerung der multimodalen Endgeräte EG können direkt als Elemente der Dialogsprache abgebildet werden oder aber in ECMA-Skript-Objekten (Java-Skript) untergebracht sein. Durch letztere Implementierung ist es möglich, diese Funktionen auch in anderen Dialogsprachen, wie z.B. VoiceXML, zu nutzen.

Um eine simultane Steuerung der Anzeigegeräte EG3 und EG2 zu ermöglichen, ist ein permanenter Rückkanal vom WEB-Server WS zu dem jeweiligen Endgerät notwendig. Das HTTP-Protokoll bietet hierfür keine direkte Unterstützung.

Das erfindungsgemäße Konzept bedient sich hierbei einer zweiten HTTP-Anfrage (Request), welche im Hintergrund der eigentlichen HTML-Seite zum WEB-Server WS aufgebaut wird und mit einem Timeout versehen ist. Liegen auf dem WEB-Server WS Informationen für die entsprechenden Geräte vor, wird der Timer vorzeitig beendet und die Informationen mit der HTTP-Antwort (Response) dem Gerät gesendet. Wenn bis zum Timeout keine Informationen vorliegen, erzeugt der WEB-Server eine leere Antwort und das Gerät beginnt den Vorgang erneut.

Die zweite HTTP-Anfrage wird im ECMA-Skript (Java-Skript) formuliert und den jeweiligen Anzeigedaten (HTML-Seite) hinzugefügt. Ein weiterer Vorteil dieses Konzeptes ist die Nutzung der Standard-Ports (Port 80 für HTTP) sowohl für die direkten Anzeigeinformationen (HTML-Seite), als auch für die Steuerinformationen. Damit treten keine Konflikte mit Firewall-Systemen auf, welche sehr verbreitet dafür sorgen, dass andere Ports gesperrt sind.

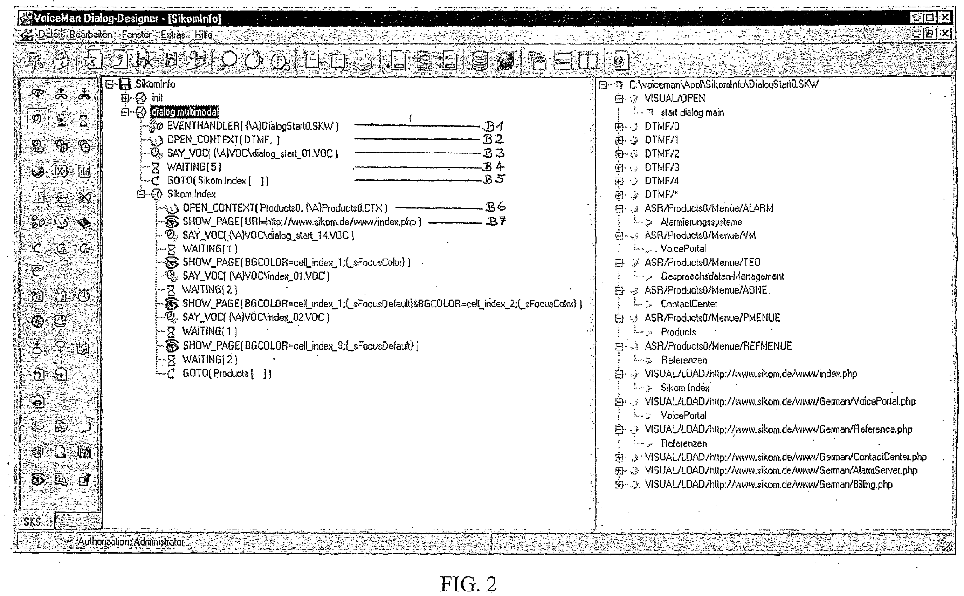

**FIG. 2** zeigt das Beispiel eines multimodalen Dialogaufbaus, wobei links der Dialogablauf und rechts das Event-Handling dargestellt sind. Im Einzelnen bedeutet die Legende folgendes:

### B1: EVENTHANDLER (LOAD_EVENTHANDLER)

Ereignisse (Events) dienen im SKS-Skript der Signalisierung von Systemänderungen bzw. Resultaten asynchron ablaufender Prozesse. So können z.B. Timer oder CTI-Endpoints Events senden, auf die dann im Dialog reagiert werden kann. Die Funktion lädt eine Aktionstabelle, welche aus einer Menge eindeutiger Zuordnungen (Events) zu Aktionen besteht. Eine Aktion beschreibt dabei einen Knoten der SKS-Baumstruktur. Bei Eintreffen eines behandelten Events verzweigt der Dialog dann an die beschriebene Stelle. Die Zuordnungen werden in einer SKW-Datei gespeichert. Alle Events, auf welche innerhalb eines Eventhandlers zugegriffen werden soll, müssen anschließend mit der Funktion OPEN_CONTEXT zur Verfügung gestellt werden. Anderenfalls bleibt die Auswahl unwirksam - die Verknüpfung inaktiv.

### B2: OPEN_CONTEXT(DTMF)

Mit dieser Funktion wird ein Kontext geöffnet. Hier an dieser Stelle ein DTMF-Kontext, welcher es ermöglicht, dass der Eventhandler auf die definierten DTMF-Resultate reagieren kann.

### B3: SAY_VOC

Diese Funktion wird benutzt, um dem Verbindungspartner den Inhalt einer VOC-Datei vorzutragen. Die entsprechenden VOC-Dateien (Sprachdateien) können vorher aufgenommen und mit Hilfe dieser Funktion abgespielt werden.

### B4: WAITING

Mit dieser Funktion kann an jeder beliebigen Stelle innerhalb der Applikation eine Wartezeit definiert werden. Das heißt eine Zeit, in welcher auf Aktivitäten wie Sprach- oder DTMF-Eingaben, gewartet wird. Die Wartezeit kann dabei individuell konfiguriert werden.

### B5: GOTO

Die Goto-Funktion gestattet einen gezielten Zustandswechsel vom aktuellen Knoten zu der Marke, die im Explorer - dort ist die Struktur des Kommandobaumes dargestellt - ausgewählt wurde. Verschiedene Parameter können zusätzlich definiert werden, damit oder ob dieser Sprung ausgeführt wird.

### B6: OPEN_CONTEXT(SPEECH)

Auch hier wird wieder ein Kontext geöffnet. Nur handelt es sich hierbei um einen Spracherkenner-Kontext. Dazu wird der Spracherkenner ausgewählt, welcher für diesen Kontext aktiviert werden soll. Welche Spracherkenner hier zur Auswahl stehen, hängt von der installierten Version ab. Alle im Konfigurations-Programm definierten Spracherkenner-Ressourcen können ausgewählt werden. Verschiedene Parameter wie die Confidence-Schwelle (Erkenner-Wahrscheinlichkeit), N-Best-Resultatsauswertung, etc. können zusätzlich definiert werden. Zusätzlich wird eine Grammatik benötigt, welche sowohl die Kommandoworte als auch die Struktur beschreibt.

### B7: SHOW_PAGE

In der Dialogsteuerung DE (VoiceMan 7.0) unterstützt ein integrierter Webserver WS zusätzlich die multimodalen Anwendungsgebiete, um beispielsweise Internetseiten über eine Sprachsteüerung akustisch wiedergeben zu können. Zeitgleich können die entsprechenden Inhalte geladen und die gerade aktiven Bereiche visualisiert werden. Die Steuerung am Bildschirm ist dabei genauso möglich, wie die Sprachsteuerung über Telefon. Für den mobilen Nutzer kann dies aber auch weiterhin einfach nur am Telefon erfolgen.

Zur Anzeige einer WEB-Seite wird die Funktion SHOW_PAGE benutzt. Dazu gibt man die entsprechende URI der anzuzeigenden WEB-Seite an. Zur Visualisierung von einzelnen Inhalten innerhalb einer Web-Seite stehen noch verschiedene Funktionen zur Verfügung. Dazu muss im Inhalt der entsprechenden WEB-Seite ein Kode hinterlegt sein, auf welchen über diese Funktionen zugegriffen werden kann.

Dazu wird jedem Inhalt eine eindeutige ID innerhalb eines WEB-Dokumentes zugeordnet, z.B. id="cell_ref_portal". Über den eindeutigen Namen "cell_ref_portal" kann man nun die Inhalt direkt ansprechen.

Mit Hilfe der Show-Page-Funktion "BGCOLOR" kann man Hintergrundfarben setzen. Dies kann man z.B. nutzen, um einen Inhalt, welcher gerade aktiv ist und eventuell vorgelesen wird, optisch hervorzuheben.

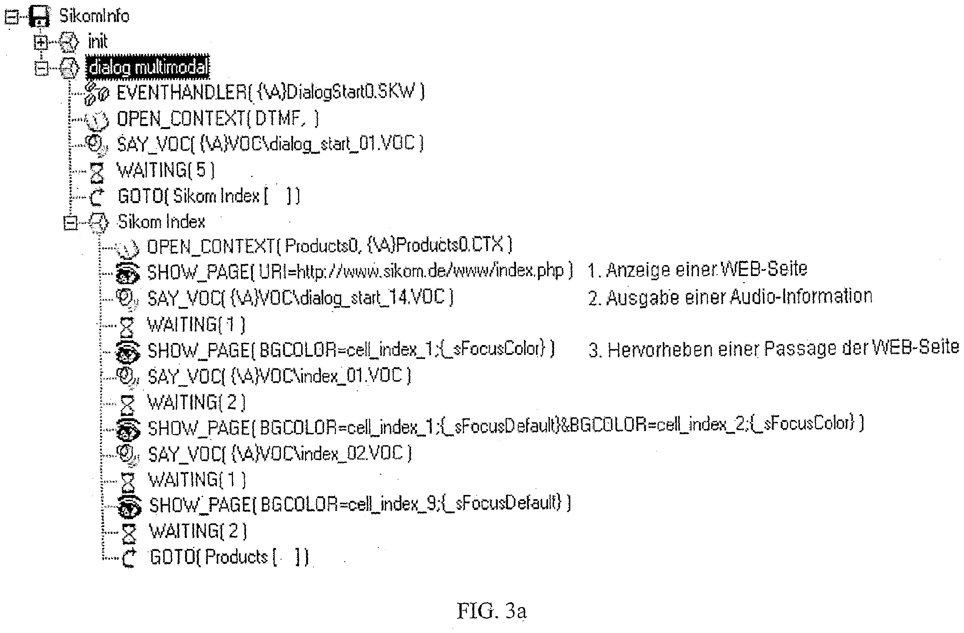

**FIG. 3a** zeigt Details der multimodalen Steuerung nach **FIG. 2****,** insbesondere die Anzeige der entsprechenden WEB-Seite (SHOW_PAGE (URI=http://www.sikom.de/www/index.php)), die Wiedergabe einer Audio-Information (SAY_VOC ({\A}VOC\dialog_start_14.VOC)) und das Hervorheben der entsprechenden Passage auf der WEB-Seite (SHOW_PAGE (BGCOLOR=cell_index_1; {_sFocusColor}).

Mit der Funktion SHOW_PAGE kann man eine WEB-Seite laden und diese anzeigen, indem man die entsprechende URL angibt. Des Weiteren kann man die Funktion benutzen, um verschiedene Inhalte hervorzuheben, z.B. farblich. Je nach dem, wie die Funktion aufgerufen wird, wird eine neue Seite geladen und angezeigt oder nur der entsprechenden Inhalte hervorgehoben. Der Zugriff auf den entsprechenden Inhalt erfolgt über eine eindeutige ID (Kennung) des Inhaltes innerhalb dieser WEB-Seite.

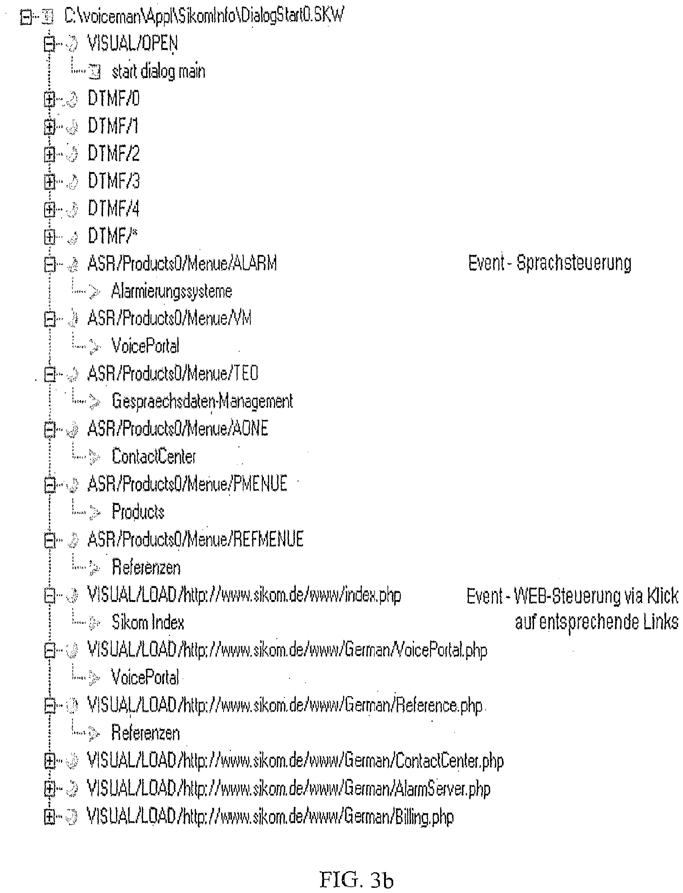

**FIG. 3b** zeigt Ereignisse (Events) und Verknüpfungen der Applikation, insbesondere Details der Auswertung von benutzerdefinierten Interaktionen und entsprechender Reaktion darauf im multimodalen Dialog nach **FIG. 2****.** Beispielsweise entspricht ASR/Products0/Menue/Alarm eine Event-Sprachsteuerung und VISUAL/LOAD/http://www.sikom.de/www/index.php einer Event-WEB-Steuerung via Klick auf entsprechende Links.

Events dienen im SKS-Skript der Signalisierung von Systemänderungen bzw. Resultaten asynchron ablaufender Prozesse. Die Standard-Events werden über die Datei "EventTable.tre", welche sich im VoiceMan-Hauptverzeichnis befindet, definiert.

Dabei können vorzugsweise folgende Events unterschieden werden:
- DTMF: DTMF-Events 0..9,*,#,A,B,C,D
- FAX: Fax-Events X, Y
- ASR: Spracherkenner-Events (Hier werden die zur Verfügung stehenden Kontexte (Domänen) angezeigt.)
∼ NoMatch-Erkennung (global)
* Result-Erkennung (global)
TIMER Timer 1,2,3,4 (Standard) und benutzerdefiniert
VISUAL Visualisierungs-Events
OPEN Öffnen einer WEB-Seite
CLOSE Schließen einer WEB-Seite
CLICK Mausklick innerhalb des WEB-Seite
INPUT Eingabe innerhalb der WEB-Seite
LOAD Laden einer Web-Seite
ERROR Fehler-Events
SETUP Setup-Fehler
TRANSFER Transfer-Fehler
SLAVE Slave-Events
CONNECTED Connect-Status des Slave-Events

### DTMF-Events

DTMF-Events ermöglichen die Reaktion auf DTMF-Eingaben. Je nachdem, welche DTMF-Eingabe vorgenommen wurde, kann man somit auf diese reagieren, einzeln oder als reine Eingabesequenz. Im Dialog-Designer können diese Events dann mit Aktionen verknüpft werden.

Innerhalb der DTMF-Events stehen zur Verfügung:

| | |
|---|---|
| 0..9 | Zifferneingabe per Tastatur |
| #,* | #- und *-Taste (Raute- und Stern-Taste) |
| A, B, C, D | Telefontasten A, B, C, D. Sie stehen nicht bei jedem Telefon zur Verfügung. |

Um ein DTMF-Event auswerten zu können, muss nach dem Eventhandler ein DTMF-Kontext (mit OPEN_CONTEXT) geöffnet werden.

### Fax-Events

Fax-Events ermöglichen es, auf die Fax-Kennung (X, Y) zu reagieren.

Um ein Fax-Event auswerten zu können, muss nach dem Eventhandler ein DTMF-Kontext (mit OPEN_CONTEXT) geöffnet werden.

### Spracherkenner-Events

Unter dem Knoten "ASR" werden alle innerhalb der Applikation bekannten Kontexte (Spracherkenner-Domänen), angezeigt. Die einzelnen Kontexte werden unter dem Namen aufgeführt, unter welchem dieser mit der Funktion OPEN_CONTEXT angelegt wurde. Innerhalb des Kontext werden dann alle Tags (Marken) angezeigt, auf die man reagieren kann.

Es werden nur die Worte, welche innerhalb der Events-Spalte stehen, auch im Explorer des Dialog-Editors angezeigt und können somit mit einer Aktion verknüpft werden. Um auf Spracherkenner-Events zugreifen zu können, muss nach dem Eventhandler ein Spracherkenner-Kontext (mit OPEN_CONTEXT) geöffnet werden.

### Timer-Events

Unter dem Knoten "TIMER" werden alle innerhalb der Applikation bekannten Timer (Standard und individuell) angezeigt. Benutzerdefinierte Timer werden unter dem Namen angezeigt, unter welchem diese innerhalb der Funktion TIMER definiert wurden.

### VISUAL-Events

Unter dem Knoten "VISUAL" werden alle visuellen Events angezeigt. Dies sind Events, welche beim Arbeiten mit und Navigieren in WEB-Pages auftreten können und auf welche man reagieren kann. Dabei beginnt man zuerst mit dem VISUAL/OPEN-Event, welches eine neue Session eröffnet. Die VISUAL/LOAD-Events benutzt man, um auf Mausklicks innerhalb der WEB-Seiten reagieren zu können und die entsprechenden WEB-Seiten zu laden.

### ERROR-Events

Unter dem Knoten "ERROR" werden alle Error-Events angezeigt.

### SLAVE-Events

Unter dem Knoten "SLAVE" werden alle Slave-Events angezeigt.

Um einzelnen Events innerhalb des Vokabular-Explorers eine Aktion zuordnen zu können, müssen diese Events in die Events-Spalte übernommen werden. Anderenfalls ist eine Verknüpfung mit Aktionen nicht möglich, da nur die Events, welche in der Events-Spalte enthalten sind, auch im Vokabular-Explorer angezeigt werden. Die Übernahme der Events in die Events-Spalte erfolgt per drag-and-drop. Markieren Sie innerhalb der Baumstruktur die benötigten Events und ziehen Sie diese mit gehaltener rechter Maustaste in die Events-Spalte. Lassen Sie die Maustaste los. Alle Events, die mit einer Aktion verknüpft sind, werden in der Events-Spalte gekennzeichnet.

Auch wenn die Ausgestaltung der erfindungsgemäßen. Vorrichtung für den Einsatz bei der telefonische Benutzung eines Sprachportals beschrieben ist, so ist der Einsatz auch in anderen Nachrichtennetzen für vermittelte Verbindungen möglich. Dies ist darauf zurückzuführen, dass das erfindungsgemäße Konzept auf Vorleistungen in Nachrichtennetzen für vermittelte Verbindungen aufbaut und die einfache Anpassung an die jeweiligen Gegebenheiten und Einbindung ohne Änderung der Erfindung bzw. des Grundkonzepts erlaubt. Weitere Anwendungsbeispiele sind:
- Versandhandel,
- Kombinierte WEB- und Sprachportale für Unternehmen und Verwaltungen,
- Interaktives Lernen,
- Bedienung von Endgeräten (PC),
- Automatische multimodale Präsentationen.

Das erfindungsgemäße Verfahren in Verbindung mit dem multimodalen Dialogserver MD ermöglicht einen kostengünstigen Aufbau beliebig vernetzbarer Endgeräte EG1, EG2, EG3 mit individueller interaktiver Kommunikation über beliebige drahtlose oder drahtgebundene Netzwerke bzw. Telekommunikationsnetze (beispielsweise UTRAN UMTS Terrestrial Radio Access Network). Der dabei ablaufende iterative Prozess hinsichtlich des Dialogs umfasst alle sinnvoll vorkommende Dialogelemente, welche entsprechend hinterlegt sind, kann insbesondere auch bei inhomogenen Strukturen eingesetzt werden und erlaubt auch ein Dialogmonitoring mit Einschluss der Endgeräte EG1, EG2, EG3 und des Dialogservers MD.

In Weiterbildung der Erfindung können im Dialogserver MD für TCP/IP und SPX/IPX Routing-Funktionalitäten (auch als LCR Least Cost Router) installiert werden usw.

## Patentansprüche

1. Verfahren zur Kopplung eigenständig arbeitender WEB- und Sprachportale in einem Telekommunikationsnetz mit Telefonnetz (TN) und Datennetz (IP), mit Vermittlungsstellen und mit analogen Endgeräten (EG1), welche über eine Teilnehmeranschlussschaltung und über Teilnehmeranschlussleitungen mit einer der Vermittlungsstellen in Verbindung stehen, oder mit digitalen Endgeräten (EG2, EG3), welche über jeweils ein Teilnehmermodem und Splitter oder über jeweils einen Netzabschluss und über die Teilnehmeranschlussleitungen mit der Vermittlungsstelle in Verbindung stehen, wobei ein mit dem Telekommunikationsnetz in Verbindung stehender multimodaler Dialogserver (MD), welcher einen Voiceserver (VS), einen Web-Server (WS) und eine Dialogsteuerung (DE) aufweist, vorgesehen ist, bei dem:
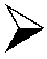 der Voiceserver (VS), für die Erzeugung bzw. Annahme einer Audio-Session zuständig ist,
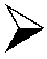 der Web-Server (WS) für die Realisierung visueller Sessions zuständig ist und
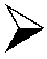 ein Dialog zwischen einem Benutzer eines der Endgeräte (EG1, EG2, EG3) und der Dialogsteuerung (DE) des multimodalen Dialogserver (MD) nach Maßgabe einer dem Benutzer genannten WEB-Adresse und Session-ID in Abhängigkeit von durch Interaktionen des Benutzers erzeugter Ereignisse durchgeführt wird,
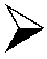 die Dialogsteuerung (DE) einen Bandbreitenbedarf für eine Informationsübertragung zu dem jeweiligen Endgerät (EG1, EG2, EG3) ermittelt und nach dessen Maßgabe automatisch weitere Kommunikationskanäle zuschaltet,
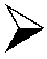 so dass eine dynamische Kanalverwaltung und Bandbreitensteuerung erzielt wird und dass alle Spracheingaben und alle Wechsel der WEB-Seiten spezielle Ereignisse erzeugen, die von der Dialogsteuerung (DE) des multimodalen Dialogserver (MD) ausgewertet werden und den Ablauf des Dialoges beeinflussen, so dass dem Benutzer eines der Endgeräte eine individuelle, interaktive Kommunikation ermöglicht wird.

2. Verfahren nach Anspruch 1, **gekennzeichnet durch** die multimodalen Dialogelemente:
- Ausgabe einer Audio-Information,
- Aufzeichnen einer Audio-Information,
- Definieren einer Grammatik für die Benutzerinteraktion,
- Anzeige einer WEB- Seite,
- Hervorheben von Passagen einer WEB- Seite.

3. Verfahren nach Anspruch 1, **dadurch gekennzeichnet, dass** die Dialogsteuerung (DE) die Übertragungspausen der Datenkommunikation zur Sprachkommunikation nutzt.

4. Verfahren nach Anspruch 1, **dadurch gekennzeichnet, dass** in der Dialogsteuerung (DE) die Session-ID als Zugangsberechtigung abgespeichert ist, wodurch die Steuerung von Verbindungsaufbau und -ablauf gegen unbefugten Zugriff gesichert ist und dass die Dialogsteuerung (DE) den Dialog protokolliert.

5. Verfahren nach Anspruch 1, **dadurch gekennzeichnet, dass** im Fall zweier getrennter Endgeräte (EG1, EG3) zwei Verbindungen zum Dialogserver (MD) notwendig sind, welche durch eine gemeinsame Session-ID synchronisiert werden.

6. Verfahren nach Anspruch 1, **dadurch gekennzeichnet, dass** die Dialogsteuerung (DE) die ihr zur Verfügung stehenden Protokolle in Kommunikation mit dem jeweiligen Endgerät (EG1, EG2, EG3) durchtestet und sich auf das von dort angebotene Protokoll einstellt.

7. Vorrichtung zur Kopplung eigenständig arbeitender WEB- und Sprachportale in einem Telekommunikationsnetz mit Telefonnetz (TN) und Datennetz (IP), mit Vermittlungsstellen und mit analogen Endgeräten (EG1), welche über eine Teilnehmeranschlussschaltung und über Teilnehmeranschlussleitungen mit einer der Vermittlungsstellen in Verbindung stehen, oder mit digitalen Endgeräten (EG2, EG3), welche über jeweils ein Teilnehmermodem und Splitter oder über jeweils einen Netzabschluss und über die Teilnehmeranschlussleitungen mit der Vermittlungsstelle in Verbindung stehen, und welche einen mit dem Telekommunikationsnetz in Verbindung stehenden multimodalen Dialogserver (MD) aufweist, welcher einen Voiceserver (VS), einen Web-Server (WS) und eine Dialogsteuerung (DE) aufweist:
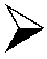 wobei der Voiceserver (VS) für die Erzeugung bzw. Annahme einer Audio-Session dient,
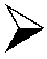 wobei der Web-Server (WS) für die Realisierung visueller Sessions dient und
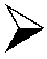 wobei die mit dem Voiceserver (VS) und dem Web-Server (WS) verbundene Dialogsteuerung (DE) dazu eingerichtet ist den Bandbreitenbedarf für die Informationsübertragung zu dem jeweiligen Endgerät (EG1, EG2, EG3) zu ermitteln und nach dessen Maßgabe automatisch weitere Kommunikationskanäle zuzuschalten, so dass eine dynamische Kanalverwaltung und Bandbreitensteuerung erzielt wird und bei welcher alle Spracheingaben und alle Wechsel der WEB- Seiten spezielle Ereignisse erzeugen, die von der Dialogsteuerung (DE) des multimodalen Dialogserver (MD) ausgewertet werden und den Ablauf des Dialoges beeinflussen,
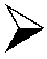 so dass einem Benutzer eines der Endgeräte (EG1, EG2, EG3) eine individuelle, interaktive Kommunikation ermöglicht wird.

8. Vorrichtung nach Anspruch 7, **dadurch gekennzeichnet, dass** an die Dialogsteuerung (DE) ein Dialogspeicher (DS), an den Voiceserver (VS) ein Audiospeicher (AR) und an den WEB-Server (WS) ein Bildspeicher (VR) jeweils angeschlossen ist.

9. Vorrichtung nach Anspruch 7, **dadurch gekennzeichnet, dass** zur Konfiguration die Dialogsteuerung (DE) eine Schnittstellenschaltung und/oder ein Bus-Interface aufweist.

10. Verfahren nach Anspruch 1, **dadurch gekennzeichnet, dass** zur simultanen Steuerung der Anzeigegeräte (EG3, EG2) die Dialogsteuerung (DE) einen permanenten Rückkanal vom WEB-Server (WS) zu dem jeweiligen Endgerät (EG3, EG2) aufbaut, wofür sich die Dialogsteuerung (DE) hierbei einer zweiten HTTP-Anfrage (Request) bedient, welche im Hintergrund der eigentlichen HTML-Seite zum WEB-Server (WS) aufgebaut wird und mit einem Timeout versehen ist.

11. Verfahren nach Anspruch 10, **dadurch gekennzeichnet, dass** die zweite HTTP-Anfrage im ECMA-Skript (Java-Skript) formuliert und den jeweiligen Anzeigedaten (HTML-Seite) hinzugefügt wird, wodurch die Nutzung der Standard-Ports (Port 80 für HTTP) sowohl für die direkten Anzeigeinformationen (HTML-Seite) als auch für die Steuerinformationen ermöglicht wird und keine Konflikte mit Firewall-Systemen auftreten.

12. Vorrichtung nach Anspruch 7, **dadurch gekennzeichnet, dass** in der Dialogsteuerung (DE) zusätzlich ein Webserver (WS) integriert ist, wodurch Internetseiten über eine Sprachsteuerung akustisch wiedergeben, zeitgleich die entsprechenden Inhalte geladen und die gerade aktiven Bereiche visualisiert werden und die Steuerung am Bildschirm dabei genauso möglich wie die Sprachsteuerung über Telefon ist.

13. Vorrichtung nach Anspruch 7, **dadurch gekennzeichnet, dass** ein Dialogmonitoring mit Einschluss der Endgeräte (EG1, EG2, EG3) und des Dialogservers (MD) durchführbar ist.

14. Vorrichtung nach Anspruch 7, **dadurch gekennzeichnet, dass** im Dialogserver (MD) für TCP/IP und SPX/IPX Routing-Funktionalitäten, auch als LCR (Least Cost Router), installiert sind.

15. Vorrichtung nach Anspruch 7, **gekennzeichnet durch** die Benutzung beim Versandhandel, bei kombinierten WEB- und Sprachportale für Unternehmen und Verwaltungen, beim Interaktiven Lernen, bei der Bedienung von Endgeräten (EG1, EG2, EG3) und bei automatischen multimodalen Präsentationen.

## Claims

1. A method for coupling independently operating WEB - and voice-portals in a telecommunication network comprising a telephone network (TN) and a data network (IP), exchanges and analogue terminals (EG1), which are connected via a subscriber line circuit and a subscriber line with an exchange, or digital terminals (EG2, EG3), which are connected via a subscriber modem and splitter or a network termination and the subscriber lines with the exchange, wherein a multimodal dialogue-server (MD) is provided comprising a voice-server (VS), a web-server (WS) and a dialog control (DE) and is connected to the telecommunication network, whereby:
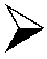 the voice-server (VS) is responsible for the generation or acceptance of an audio session,
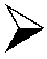 the web-server (WS) is responsible for the realization of visual sessions and
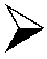 a dialogue between an user of one of the terminals (EG1, EG2, EG3) and the dialogue control (DE) of the multimodal dialogue-server (MD) according to a user named WEB-Address and session-ID is performed in response to events generated by user interaction,
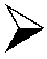 the dialogue control (DE) determines a bandwidth requirement for a transmission of information to the respective terminal (EG1, EG2, EG3) and according to this requirement automatically switches on further communication channels,
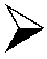 whereby a dynamic channel management and bandwidth control is achieved and whereby all voice inputs and all WEB-page changes generate special events evaluated by the dialog control (DE) of the multimodal dialogue-server (MD) and affecting the sequence of the dialogue, enabling an individual, interactive communication by an user of one of the terminals (EG1, EG2, EG3).

2. The method according to claim 1, **characterized by** the multimodal dialog elements:
- output of audio information,
- recording of audio information,
- defining a grammar for the user interaction,
- displaying a WEB-side,
- highlighting passages of a WEB-side.

3. The method according to claim 1, **characterized in that** the dialogue control (DE) uses the transmission pauses of the data communication for voice communication.

4. The method according to claim 1, **characterized in that** the dialogue control (DE) stores the session ID as an access authorization, whereby the control of connection establishment and procedure is secured against unauthorized access and that the dialogue control (DE) records the dialogue.

5. The method according to claim 1, **characterized in that** in the case of two separate terminals (EG1, EG3) two connections to the dialogue-server (MD) are necessary and they are synchronized by a common session-ID.

6. The method according to claim 1, **characterized in that** the dialogue control (DE) tests the protocols available to it in communication with the respective terminal (EG1, EG2, EG3) and adapts to the protocol offered there.

7. An apparatus for coupling independently operating WEB and voice portals in a telecommunication network comprising a telephone network (TN) and a data network (IP), exchanges and analogue terminals (EG1), which are connected via a subscriber line circuit and a subscriber line with an exchange, or digital terminals (EG2, EG3), which are connected via a subscriber modem and splitter or a network termination and the subscriber lines with the exchange, and which is provided with an multimodal dialogue server (MD) connected to the telecommunication network, the dialogue-server (MD) has a voice-server (VS), a web-server (WS) and a dialogue control (DE):
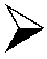 whereby the voice-server (VS) is responsible for the generation or acceptance of an audio session,
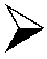 whereby the web-server (WS) is responsible for the realization of visual sessions and
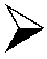 whereby the dialogue control (DE) connected to the voice server (VS) and the web-server (WS) determines a bandwidth requirement for a transmission of information to the respective terminal (EG1, EG2, EG3) and according to this requirement automatically switches on further communication channels, such a dynamic channel management and bandwidth control is achieved, and whereby all voice inputs and all WEB-page changes generate special events evaluated by the dialog control (DE) of the multimodal dialogue-server (MD) and affecting the sequence of the dialogue,
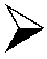 such enabling an individual, interactive communication by an user of one of the terminals (EG1, EG2, EG3).

8. The apparatus according to claim 7, **characterized in that** a dialogue memory (DS) to the dialogue control (DE), an audio memory (AR) to the voice-server (VS) and an image memory (VR) to the WEB-server (WS) is connected in each case.

9. The apparatus according to claim 7, **characterized in that** for configuration, the dialogue control (DE) has an interface circuit and / or a bus interface.

10. The method according to claim 1, **characterized in that** to enable simultaneous control of the display devices (EG3, EG2), the dialogue control (DE) establishes a permanent return channel from the WEB-server (WS) to the respective terminal (EG3, EG2), whereby the dialogue control (DE) uses a second HTTP-request (request), which is set up in the background of the actual HTML-page for the WEB-server WS and is provided with a timeout.

11. The method according to claim 10, **characterized in that** the second HTTP-request is formulated as ECMA-script (Java-script) and added to the respective display data (HTML-page), such the use of the standard ports (port 80 for HTTP) both for the direct display information (HTML-page), as well as for the control information is enabled and no conflicts with firewall systems occurs.

12. The apparatus according to claim 7, **characterized in that** an additional web -server (WS) is integrated in the dialog control (DE) to be able to acoustically reproduce Internet pages via voice control, and at the same time, the corresponding contents can be loaded and the currently active areas can be visualized such the control via the screen is just as possible as the voice control via telephone.

13. The apparatus according to claim 7, **characterized in that** a dialog monitoring including the terminals (EG1, EG2, EG3) and the dialogue-server (MD) is feasible.

14. The apparatus according to claim 7, **characterized in that** for TCP / IP and SPX / IPX routing functionalities, also as LCR least cost routers, can be installed in the dialogue-server (MD).

15. The apparatus according to claim 7, **characterized by** the use in mail order, combined WEB-and Voice-portals for businesses and administrations, interactive Learning, operation of terminals (EG1, EG2, EG3) and automatic multimodal presentations.

## Revendications

1. Procédé de couplage indépendant de portails WEB et de réseaux vocaux d'un réseaux avec un réseaux téléphoniques (TN) et un réseau de données (IP), avec centres de commutation et des terminaux analogiques (EG1), reliés par un circuit de ligne d'abonné et des lignes d'abonné à un des centres de commutation, ou des terminaux numériques (EG2, EG3) reliés par un modem d'abonné et splitter ou par une terminaison de réseau et des lignes d'abonné du centre de commutation, dans lequel un serveur de dialogue multimodal (MD) est en communication avec le centre de commutation, le serveur de dialogue multimodal (MD) comporte un serveur vocal (VS), un serveur Web (WS) et une commande de dialogue (DE) par laquelle:
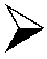 le serveur vocal (VS) est responsable pour la génération ou acceptation une session audio,
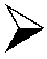 le serveur Web (WS) est responsable pour la réalisation des sessions visuelles et
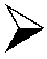 un dialogue entre les terminaux (EG1, EG2, EG3) l'utilisateur et le contrôle de dialogue (DE) du serveur de dialogue multimodal (MD) selon un utilisateur nommé WEB l'adresse et l'identificateur de session sont exécutés en réponse aux événements générés par l'interaction de l'utilisateur,
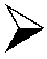 la commande de dialogue (DE) détermine du besoin en bande passante pour une transmission d'informations au terminaux respectif (EG1, EG2, EG3) et active automatiquement d'autres canaux de communication,
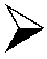 tel que permettant une gestion dynamique des canaux et un contrôle de bande passante et que toutes les entrées vocales et tous les changements de pages Web génèrent des événements spéciaux évalués par le contrôle de dialogue (DE) du serveur de dialogue multimodal (MD) et l'expiration du Influencez le dialogue, permettant l'utilisateur d'une des terminaux (EG1, EG2, EG3) une communication individuelle et interactif.

2. Procédé selon la revendication 1, **caractérisé par** les éléments de dialogue multimodaux:
- sortie d'informations audio,
- enregistrement d'informations audio,
- définition d'une grammaire pour l'interaction de l'utilisateur,
- affichage d'un page WEB,
- mise en évidence des passages d'un page WEB.

3. Procédé selon la revendication 1, **caractérisé en ce que** la commande de dialogue (DE) utilise les pauses de transmission de la communication de données pour la communication vocale.

4. Procédé selon la revendication 1, **caractérisé en ce que** dans la commande de dialogue (DE), un identifiant de session est stocké en tant qu'autorisation d'accès, le contrôle d'établissement de connexion et de procédure étant sécurisé contre un accès non autorisé et que le dialogue est enregistré par la commande de dialogue (DE).

5. Procédé selon la revendication 1, **caractérisé en ce que** en le cas du deux terminaux séparé (EG1, EG3) deux connexions au serveur de dialogue multimodal (MD) sont nécessaires, celui sont synchronisées par un identifiant de session commun.

6. Procédé selon la revendication 1, **caractérisé en ce que** la commande de dialogue (DE) teste les protocoles mis à sa disposition en communication avec le terminal respectif (EG1, EG2, EG3) et s'adapte au protocole qui y est proposé.

7. Dispositif de couplage indépendant de portails WEB et de réseaux vocaux d'un réseaux avec un réseaux téléphoniques (TN) et un réseau de données (IP), avec centres de commutation et des terminaux analogiques (EG1), reliés par un circuit de ligne d'abonné et des lignes d'abonné à un des centres de commutation, ou des terminaux numériques (EG2, EG3) reliés par un modem d'abonné et splitter ou par une terminaison de réseau et des lignes d'abonné du centre de commutation, dans lequel un serveur de dialogue multimodal (MD) est en communication avec un réseaux, le serveur de dialogue multimodal (MD) comporte un serveur vocal (VS), un serveur Web (WS) et une commande de dialogue (DE) par laquelle:
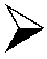 à condition que le serveur vocal (VS) est responsable pour la génération ou acceptation une session audio,
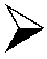 à condition que le serveur Web (WS) est responsable pour la réalisation des sessions visuelles et
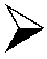 à condition que le contrôle de dialogue (DE) connecté au serveur vocal (VS) et au serveur web (WS détermine du besoin en bande passante pour une transmission d'informations au terminaux respectif (EG1, EG2, EG3) et active automatiquement d'autres canaux de communication tel que permettant une gestion dynamique des canaux et un contrôle de bande passante et que toutes les entrées vocales et tous les changements de pages Web génèrent des événements spéciaux évalués par le contrôle de dialogue (DE) du serveur de dialogue multimodal (MD) et l'expiration du Influencez le dialogue,
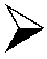 tel que permettant l'utilisateur d'une des terminaux (EG1, EG2, EG3) une communication individuelle et interactif.

8. Dispositif selon la revendication 7, **caractérisé en ce que** une mémoire de dialogue (DS) est connecté à la commande de dialogue (DE), au serveur vocal (VS) est connecté une mémoire audio (AR) et au serveur WEB (WS) est connecté une mémoire d'image (VR).

9. Dispositif selon la revendication 7, **caractérisé en ce que** pour la configuration, la commande de dialogue (DE) comporte un circuit d'interface et / ou une interface de bus.

10. Procédé selon la revendication 1, **caractérisé en ce que** pour permettre un contrôle simultané des dispositifs d'affichage (EG3, EG2), la commande de dialogue (DE) établit un canal de retour permanent depuis le serveur WEB (WS) vers le terminaux respectif (EG3, EG2), la commande de dialogue (DE) utilise une deuxième requête HTTP (requête), qui est mise en place en arrière-plan de la page HTML réelle pour le serveur WEB (WS) et est dotée d'un délai d'expiration.

11. Procédé selon la revendication 10, **caractérisé en ce que** la deuxième requête HTTP est formulée dans le script ECMA (script Java) et ajoutée aux données d'affichage respectives (page HTML) permettant l'utilisation des ports standard (port 80 pour HTTP) à la fois pour les informations d'affichage direct (page HTML), ainsi que pour les informations de contrôle et n'y a pas de conflit avec les systèmes de pare-feu.

12. Dispositif selon la revendication 7, **caractérisé en ce que** dans le contrôle de dialogue un additionnel serveur Web (WS) est intégré, pour pouvoir reproduire de façon acoustique des pages Internet via le contrôle vocal, en même temps, le contenu correspondant peut être chargé et les zones actuellement actives peuvent être visualisées et le contrôle sur l'écran est tout aussi possible que le contrôle vocal par téléphone.

13. Dispositif selon la revendication 7, **caractérisé en ce qu'une** surveillance de dialogue comprenant les terminaux (EG1, EG2, EG3) et le serveur de dialogue (MD) peut être réalisée.

14. Dispositif selon la revendication 7, **caractérisé en ce que** dans le serveur de dialogue (MD) des fonctionnalités de routage pour TCP / IP et SPX / IPX et aussi à moindre coût LCR sont installées.

15. Dispositif selon la revendication 7, **caractérisé par** application pour Mail order, Portails WEB et vocaux combinés pour les entreprises et les administrations, apprentissage interactif, Fonctionnement des terminaux (EG1, EG2, EG3) et des présentations multimodales automatiques.
